# EUROPEAN PATENT APPLICATION

(11) **EP 4 801 161 A1**
(43) Date of publication of application: **02.09.2026**
(21) Application number: 24895915.7
(22) Date of filing: 18.09.2024
(51) Int. Cl.: H04W 72/1268

(54) **TRANSMISSION PROCESSING METHOD, ELECTRONIC DEVICE, AND STORAGE MEDIUM**

(30) Priority: 27.11.2023 CN 202311607771
(71) Applicant: ZTE Corporation, Shenzhen, Guangdong 518057 (CN)
(72) Inventor: GOU, Wei, Shenzhen, Guangdong 518057 (CN); HAN, Xianghui, Shenzhen, Guangdong 518057 (CN); WEI, Xingguang, Shenzhen, Guangdong 518057 (CN); KOU, Shuaihua, Shenzhen, Guangdong 518057 (CN); SHI, Jing, Shenzhen, Guangdong 518057 (CN)
(74) Representative: Aipex B.V.
(86) International application number: PCT/CN2024/119390
(87) International publication number: WO 2025/112817

(57) **Abstract**

Provided are a transmission processing method, an electronic device, and a storage medium applicable to the technical field of wireless communication. The transmission processing method includes the following: a terminal receives a DL transmission or sends a UL transmission according to a predefined rule in a time slot including both DL subband resources and UL subband resources, and the DL subband resources and the UL subband resources are included in the time slot in a frequency division manner.

## Description

### TECHNICAL FIELD

The present disclosure relates to the technical field of wireless communication, and in particular to a transmission processing method, an electronic device, and a storage medium.

### BACKGROUND

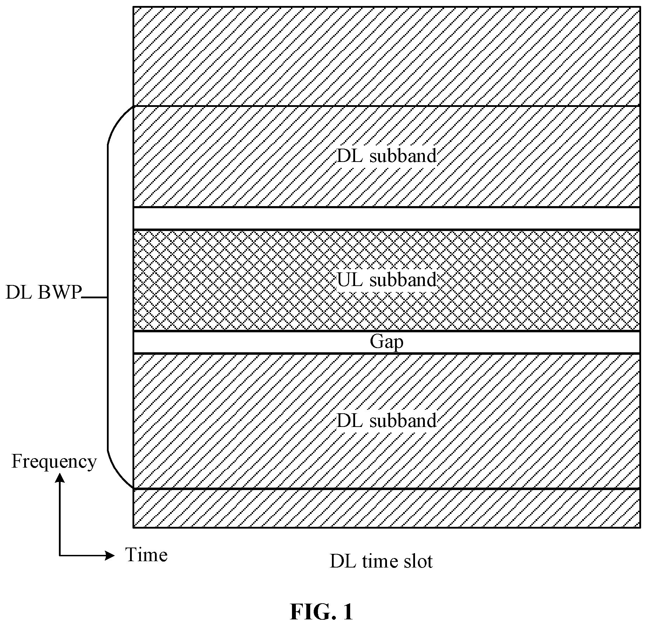

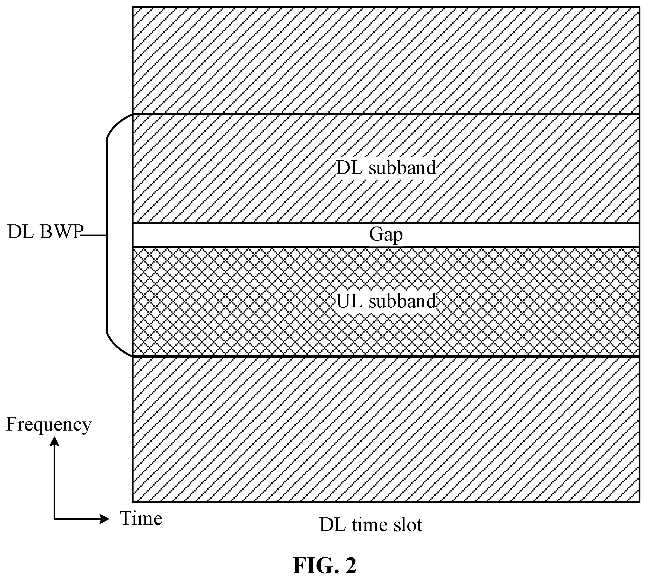

To improve uplink (UL) coverage, UL latency and UL capacity of the time division duplex (TDD) system, subband full duplex (SBFD) technology is proposed. In the downlink (DL) symbol or the DL slot, the UL subband and the DL subband are configured. For example, the UL subband and the DL subband are configured in the frequency domain range of the DL bandwidth part (BWP) and the frequency domain range of the UL BWP. The UL subband and the DL subband are also referred to as SBFD subbands, that is, an SBFD subband is configured in the DL symbol or the DL slot, and the SBFD subband generally includes the DL subband and the UL subband. For example, in a 100MHz TDD carrier, 20 consecutive resource blocks (RBs) are configured as UL subbands in the DL BWP in the DL symbol or the DL slot, and the remaining frequency domain resources for the DL BWP are DL subbands (the gap may be omitted). Alternatively, a DL subband may also be configured in the DL BWP in the DL symbol or the DL slot. In this manner, in the DL symbol or the DL slot, the UL subband can be used for the UL transmission, and the DL subband can be used for the DL transmission. Referring to FIG. 1, a UL subband and a DL subband are configured in a DL symbol or a DL slot, and this structure is generally referred to as "DUD" (frequency domain-based structure). Referring to FIG. 2, a UL subband and a DL subband are configured in a DL symbol or a DL slot, and this structure is generally referred to as "DU" or "UD" (frequency domain-based structure). A symbol configured with the SBFD subband is referred to as an SBFD symbol. A slot containing the SBFD symbol is referred to as an SBFD slot. A symbol not configured with the SBFD subband is referred to as a non-SBFD symbol (i.e., a regular symbol). A slot not containing the SBFD symbol is referred to as a non-SBFD slot. For the old version of user equipment (UE) or the UE not configured with the SBFD subband, the UE is unaware of the presence of the SBFD subband (in the DL subband and the UL subband). For this type of UE, if the DL transmission is configured or scheduled in the SBFD symbol, how to perform the DL transmission, especially when the resources for the DL transmission include part or all of the resources in the UL subband, i.e., when the resources for the DL transmission overlap with the UL subband resources (including the time domain and/or the frequency domain).

### SUMMARY

The embodiments of the present disclosure provide a transmission processing method, an electronic device and a storage medium, to implement the processing mode for a UL transmission or a DL transmission by a terminal when resources for the DL transmission and resources for the UL transmission exist simultaneously, to improve the resource utilization rate and enhance the communication efficiency.

The embodiments of the present disclosure provide a transmission processing method. The method includes the following steps:

The terminal receives a DL transmission or sends a UL transmission according to a predefined rule in a time slot including both DL subband resources and UL subband resources.

The DL subband resources and the UL subband resources are included in the time slot in a frequency division manner.

The embodiments of the present disclosure also provide a transmission processing method, and the method includes the following steps:

The base station sends a DL transmission or receives a UL transmission according to a predefined rule in a time slot including both DL subband resources and UL subband resources.

The DL subband resources and the UL subband resources are included in the time slot in a frequency division manner.

The embodiments of the present disclosure also provide an electronic device. The electronic device includes one or more processors, and a memory for storing one or more programs.

The one or more programs, when executed by the one or more processors, cause the one or more processors to implement the method according to any one of the embodiments of the present disclosure.

The embodiments of the present disclosure also provide a computer-readable storage medium. One or more programs are stored in the computer-readable storage medium. The one or more programs, when executed by one or more processors, are configured to implement the method according to any one of the embodiments of the present disclosure.

### BRIEF DESCRIPTION OF DRAWINGS

FIG. 1 is an example diagram of a resource configuration according to some embodiments.
FIG. 2 is another example diagram of a resource configuration according to some embodiments.
FIG. 3 is a configuration example diagram of resources A according to some embodiments.
FIG. 4 is a configuration example diagram of overlapping of resources according to some embodiments.
FIG. 5 is a flowchart of a transmission processing method according to some embodiments.
FIG. 6 is another flowchart of a transmission processing method according to some embodiments.
FIG. 7 is a schematic structural diagram of a transmission processing device according to some embodiments.
FIG. 8 is another schematic structural diagram of a transmission processing device according to some embodiments.
FIG. 9 is a schematic structural diagram of an electronic device according to some embodiments.

### DETAILED DESCRIPTION

It should be understood that the embodiments described herein are merely used to explain the present disclosure, but are not intended to limit the present disclosure.

In the following description, suffixes such as "module", "part" or "unit" used to denote elements are merely used to facilitate the description of the present disclosure, and have no specific meaning in themselves. Therefore, "module", "component" or "unit" may be used in a mixed manner.

The embodiments of the present disclosure propose a co-frequency co-time full duplex (CCFD) operation, and the configuration of CCFD resources may include the following: in a carrier, a base station configures an RB set for the CCFD operation in the frequency domain based on consecutive RBs, and configures some slots or symbols for the CCFD operation in the time domain based on symbols or slots. In this manner, some time-frequency resources (denoted as resources A) for the CCFD operation are obtained. Resources A, also referred to as the CCFD subbands, include resources for the DL transmission and resources for the UL reception. At least on the base station side, the resources A may be used for a CCFD transmission. That is, the base station can use the same time and the same frequency to simultaneously transmit DL signals and receive UL signals in the resources A. The UE side can only support a time-division DL transmission and a time-division UL transmission.

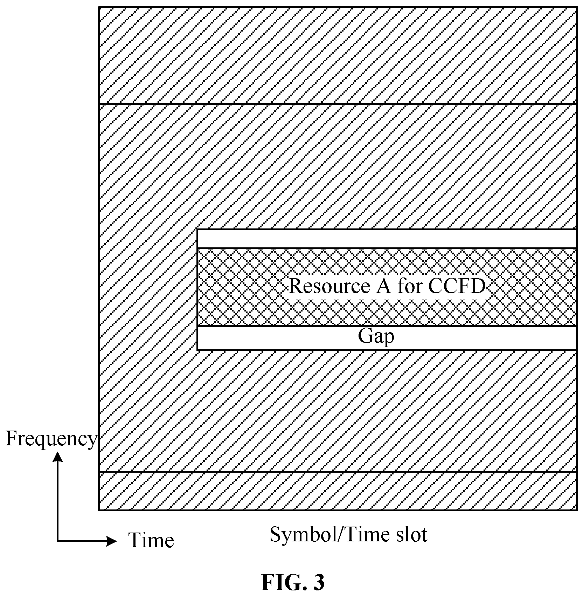

In the present disclosure, a symbol or a slot configured with the resources A is referred to as a CCFD symbol or a CCFD slot, and a symbol or a slot not configured with the resources A is referred to as a non-CCFD symbol or a non-CCFD slot (e.g., a regular DL, UL or F symbol, or a regular DL, UL or F slot). An example of the resources A is shown in FIG. 3. For the old version of UE, or the UE not configured with the CCFD subband, the UE is unaware of the presence of the CCFD subband. For this type of UE, if the DL transmission is configured or scheduled in the CCFD symbol, how to perform the DL transmission, especially when the resources for the DL transmission include part or all of the resources in the CCFD subband, i.e., when the resources for the DL transmission overlap with the CCFD subband resources (in the time domain and/or the frequency domain). In addition, a UL subband based on the SBFD subband or a DL subband based on the SBFD subband may be centrally transmitted or received, and may also be applied to a transmission based on the CCFD subband or a reception based on the CCFD subband (for example, the resources in the CCFD subband correspond to the UL subbands in the SBFD symbol, and resources outside the CCFD subbands in the CCFD symbol correspond to the DL subbands in the SBFD symbol, which may be replaced equivalently). For example, the SBFD symbol is replaced with the CCFD symbol, or the SBFD slot is replaced with the CCFD slot, and the non-SBFD symbol is replaced with the non-CCFD symbol, or the non-SBFD slot is replaced with the non-CCFD slot.

In summary, if the UE is configured or schedules a DL transmission in a DL slot configured with the SBFD subband, i.e., in the SBFD slot or the SBFD symbol, is the DL transmission transmitted? It is assumed that the UE is unaware of the SBFD subband configuration, and this type of UE includes the old version of the UE or the UE not configured with the SBFD subband. In other words, this type of UE is unaware of the SBFD symbol configuration or the SBFD slot configuration in the slot, that is, this type of UE is only aware of the DL symbol or the DL slot, and the UL symbol or the UL slot, as well as a flexible (F) symbol. This type of UE is denoted as type 1 and represented by the UE1. It is assumed that the UE is aware of the SBFD subband configuration, and this type of UE is configured with the SBFD subband, or the UE can parse the SBFD subband configuration information. In other words, this type of UE is aware of the SBFD symbol configuration or the SBFD slot configuration in the slot, that is, this type of UE may identify the time-frequency location where the DL slots or the DL symbols are configured with the SBFD subbands (including UL subbands and DL subbands). This type of UE has the capability of performing the UL transmission in the UL subbands and performing the DL transmission in the DL subbands in the SBFD symbol. This type of UE is denoted as type 2 and represented by the UE2.

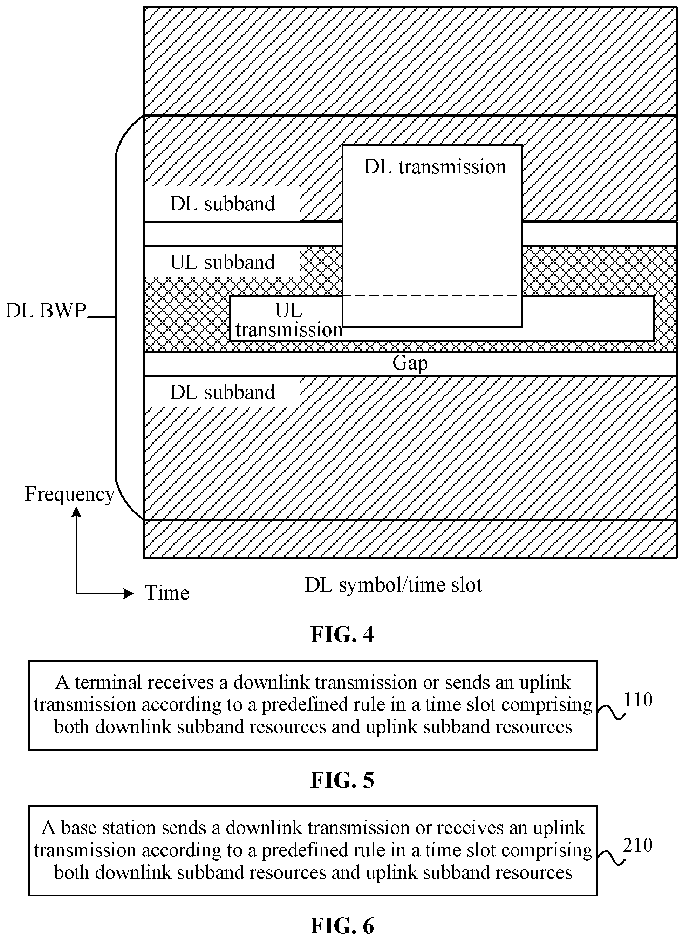

The base station schedules or configures a DL transmission (including a dynamic grant physical DL shared channel (DG PDSCH)), a semi-persistently scheduled physical DL shared channel (SPS PDSCH), a physical DL control channel (PDCCH), a DL reference signal, etc.) for the UE1 in the SBFD symbol. For example, in FIG. 4, the DL transmission of the UE1 is scheduled, and the resources for the DL transmission overlap with the UL subband resources. However, since the UE1 is unaware of the UL subband configuration, the UE1 is unaware that the resources for the DL transmission overlap with the UL subband resources. Moreover, the UL transmission of the UE2 is scheduled or configured in the UL subband, as shown in FIG. 4, the resources for the UL transmission overlap with the resources for the DL transmission of the UE1. However, the UE2 is unaware that the resources for the UL transmission overlap with the DL transmission resources. In this case, the base station and the UE1 may determine the processing method for the DL transmission through the transmission processing method provided in the embodiments of the present disclosure.

FIG. 5 is a flowchart of a transmission processing method according to some embodiments, which is applicable to DL transmission or UL transmission processing when UL resources and DL resources exist simultaneously. The method may be executed by a transmission processing device. The transmission processing device may be implemented by software and/or hardware methods and is generally integrated in the user equipment. Referring to FIG. 5, the transmission processing method includes step 110.

In step 110, the terminal receives a DL transmission or sends a UL transmission according to a predefined rule in a time slot including both DL subband resources and UL subband resources. The DL subband resources and the UL subband resources are included in the time slot in a frequency division manner.

In some embodiments, the time slot includes both the DL subband resources and the UL subband resources. Moreover, the DL subband resources and the UL subband resources are located in the above-mentioned time slot in a frequency division manner, and the terminal may send UL transmission and/or receive DL according to the pre-defined rule.

In some embodiments, the predefined rule includes the following:

When resources for the DL transmission and resources for the UL transmission overlap in the time slot, the DL transmission or the UL transmission is processed based on a terminal type corresponding to the DL transmission. The overlapping includes at least one of the following: partially or fully overlapping in time domain, partially or fully overlapping in frequency domain, or partially or fully overlapping in time domain and frequency domain. The terminal type includes: a second terminal capable of identifying the time slot and a first terminal incapable of identifying the time slot.

In some embodiments, the resources for the DL transmission and the resources for the UL transmission overlap in the time slot, and the mode of UL transmission or DL transmission may be determined according to the terminal type of the terminal corresponding to DL transmission. The terminal type may include the first terminal and the second terminal. The second terminal is capable of identifying the time slots where the resources for the UL transmission and the resources for the DL transmission overlap, while the first terminal is incapable of identifying the time slot where the resources for the UL transmission and the resources for the DL transmission overlap.

In other embodiments, the predefined rule includes the following:

When the DL transmission is a physical DL shared channel (PDSCH) transmission, the PDSCH is scheduled by DL control information (DCI) in a PDCCH, and the DCI is scrambled by at least one of a cell radio-network temporary identifier (C-RNTI), a modulation and coding scheme C-RNTI (MCS-C-RNTI), a configured scheduling RNTI (CS-RNTI), a group RNTI (G-RNTI), a group configured scheduling RNTI (G-CS-RNTI) or a multicast control channel RNTI (MCCH-RNTI), the DL transmission is performed in resources for the DL transmission without utilizing any of the resources for the DL transmission that overlap with the UL subband resources.

In some embodiments, when the DL transmission is the PDSCH transmission, the PDSCH is scheduled by the DCI in the PDCCH, and the DCI is scrambled by at least one of the C-RNTI, the MCS-C-RNTI, the CS-RNTI, the G-RNTI, the G-CS-RNTI or the MCCH-RNTI, the DL transmission is performed without utilizing any of the DL subband resources that overlap with the UL resources.

In other embodiments, the predefined rule includes the following:

When the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the DL transmission without utilizing any of the resources for the DL transmission that overlap with the UL subband resources.

In an example, when the DL transmission is a PDCCH transmission, and the DCI contained in the PDCCH is scrambled by at least one of the C-RNTI, the MCS-C-RNTI, the CS-RNTI, the G-RNTI, the G-CS-RNTI or the MCCH-RNTI, the DL transmission may be performed without utilizing any of the DL subband resources that overlap with the UL resources.

In other embodiments, the predefined rule includes the following:

When the DL transmission is a PDCCH transmission, and a PDCCH is located in the resources for a common PDCCH, the DL transmission is performed in resources for the DL transmission without utilizing any of the resources for the DL transmission that overlap with the UL subband resources.

In some embodiments, when the DL transmission is the PDCCH transmission, and the PDCCH is located in the resources for the common PDCCH, the DL transmission may be performed without utilizing any of the DL subband resources that overlap with the UL subband resources.

In other embodiments, the predefined rule includes the following:

When the DL transmission is a DL reference signal, the DL transmission is performed in resources for the DL transmission without utilizing any of the resources for the DL transmission that overlap with the UL subband resources.

In some embodiments, when the DL transmission is the DL reference signal, the DL transmission may be performed in the resources for the DL transmission without utilizing any of the DL subband resources that overlap with the UL subband resources.

On the basis of the above embodiments, the transmission processing method further includes the following: the first terminal receives a notification of a first resource, and the DL transmission is prohibited in the first resource.

The first terminal may be user equipment incapable of identifying the time slot where the resources for the UL transmission and the resources for the DL transmission overlap. The first resource may be a resource A, that is, a time slot that includes both the DL subband resources and the UL subband resources.

In some embodiments, when the terminal is the first terminal, the notification of the first resource may also be received. When the first terminal receives the notification, the DL transmission is prohibited in the first resource.

On the basis of the above embodiments, the transmission processing method further includes at least one of the following:

The first resource is indicated through DCI, and the first resource includes overlapping resources.

The resources for the DL transmission are configured to be prohibited from including the UL subband resources in the time slot.

The first resource is configured based on a radio resource control (RRC) signaling, a PDSCH transmission is not performed in the first resource based on a pre-agreement between a base station and the terminal, or whether the PDSCH transmission is performed in the first resource is indicated based on a physical layer signaling of the base station.

In some embodiments, the first resource may be notified to the first terminal in at least one of the following manners:

The first resource may be indicated to the first terminal through DCI, and the first resource may include overlapping resources.

Alternatively, the first terminal may make a pre-agreement with the base station, and the pre-agreement may include the following: the resources for the DL transmission are configured to be prohibited from including the UL subband resources in the time slot.

Alternatively, the first resource may be configured through the RRC signaling, the PDSCH transmission may not be performed in the first resource, and the first resource may be indicated through the pre-agreement between the base station and the terminal or be indicated by the base station through the physical layer signaling.

In other embodiments, the predefined rule includes the following:

When the DL transmission is a PDSCH transmission, the PDSCH is scheduled by DCI in a PDCCH, and the DCI is scrambled by at least one of a C-RNTI, a MCS-C-RNTI, a CS-RNTI, a G-RNTI, a G-CS-RNTI or a MCCH-RNTI, the DL transmission is performed in resources for the PDSCH even if the resources for the PDSCH include resources that overlap with the UL subband resources.

In some embodiments, when the DL transmission is the PDSCH transmission, the PDSCH is scheduled by the DCI in the PDCCH, and the DCI is scrambled by at least one of the C-RNTI, the MCS-C-RNTI, the CS-RNTI, the G-RNTI, the G-CS-RNTI or the MCCH-RNTI, the DL transmission may be performed in the resources for the PDSCH, and the resources for the PDSCH may include overlapping resources, that is, the DL transmission may be performed in the resources where the DL subband resources and the UL subband resources overlap.

In other embodiments, when the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the PDCCH even if the resources for the PDCCH include resources that overlap with the UL subband resources.

In some embodiments, when the DL transmission is the PDCCH transmission, and the DCI contained in the PDCCH is scrambled by at least one of the C-RNTI, the MCS-C-RNTI, the CS-RNTI, the G-RNTI, the G-CS-RNTI or the MCCH-RNTI, the DL transmission may be performed in the resources for the PDCCH, and the resources for the PDCCH may include overlapping resources, that is, the DL transmission may be performed in the resources where the DL subband resources and the UL subband resources overlap.

In other embodiments, the predefined rule includes the following:

When the DL transmission is a PDCCH transmission, and DCI contained in the PDCCH is scrambled by at least one of a system information RNTI (SI-RNTI), a random access RNTI (RA-RNTI), a message B RNTI (MSGB-RNTI), a paging RNTI (P-RNTI) or a temporary cell RNTI (TC-RNTI), the DL transmission is performed in resources for the PDCCH even if the resources for the PDCCH include resources that overlap with the UL subband resources.

In some embodiments, when the DL transmission is the PDCCH transmission, and the DCI contained in the PDCCH is scrambled by at least one of the SI-RNTI, the RA-RNTI, the MSGB-RNTI, the P-RNTI or the TC-RNTI, the DL transmission may be performed in the resources for the PDCCH, and the resources for the PDCCH may include overlapping resources, that is, the DL transmission may be performed in the resources where the DL subband resources and the UL subband resources overlap.

In other embodiments, the predefined rule includes the following: when the DL transmission is a DL reference signal, the DL transmission is performed in resources for the DL reference signal even if the resources for the DL reference signal include resources that overlap with the UL subband resources.

In some embodiments, when the DL transmission may be the DL reference signal, the DL transmission may be performed in the resources for the DL reference signal, and the resources for the DL reference signal include resources that overlap with the UL subband resources.

In other embodiments, the predefined rule includes the following:

When the DL transmission is a PDSCH transmission, the PDSCH is scheduled by DCI in a PDCCH, and the DCI is scrambled by at least one of a SI-RNTI, a RA-RNTI, a MSGB-RNTI, a P-RNTI or a TC-RNTI, the DL transmission is performed in resources for the PDSCH even if the resources for the PDSCH include resources that overlap with the UL subband resources.

In some embodiments, when the DL transmission is the PDSCH transmission, the PDSCH is scheduled by the DCI in the PDCCH, and the DCI is scrambled by one or more of the SI-RNTI, the RA-RNTI, the MSGB-RNTI, the P-RNTI or the TC-RNTI, the DL transmission may be performed in the resources for the PDSCH, and the resources for the PDSCH include resources that overlap with the UL subband resources.

In some embodiments, the predefined rule includes the following:

When the DL transmission is a PDCCH transmission, and a PDCCH is located in resources for a common PDCCH, the DL transmission is performed in resources for the PDCCH even if the resources for the PDCCH include resources that overlap with the UL subband resources.

In some embodiments, the DL transmission may be the PDCCH transmission, and the PDCCH is located in the resources for the common PDCCH, the DL transmission is performed in resources for the PDCCH, and the resources for the PDCCH may include resources that overlap with the UL subband resources, that is, the DL transmission may be performed in the resources where the DL subband resources and the UL subband resources overlap.

On the basis of the above embodiments, the transmission processing method further includes the following:

A second terminal receives a notification of a second resource, and the UL transmission is prohibited in the second resource.

The second terminal may be user equipment capable of identifying the time slot where the resources for the UL transmission and the resources for the DL transmission overlap, and the second resource may be a resource of the second terminal that is prohibited from performing the UL transmission.

In some embodiments, when the terminal is the second terminal, the notification informing the second resource may be received, and the second terminal is prohibited from performing the UL transmission.

On the basis of the above embodiments, the transmission processing method further includes at least one of the following:

The second resource is indicated through DCI, and the second resource includes overlapping resources.

The UL transmission is scheduled in a third resource according to a DCI notification. The third resource is different from an original resource for the UL transmission, and the UL transmission is cancelled in the original resource.

The second resource is configured based on a RRC signaling. The PDSCH transmission is not performed in the second resource based on a pre-agreement between a base station and the terminal, or whether a PDSCH transmission is performed in the second resource is indicated based on a physical layer signaling of the base station.

In some embodiments, the second resource may be indicated through the DCI, and the second resource may include resources where the DL subband resources and the UL subband resources overlap. Alternatively, the UL transmission is carried in the third resource according to the DCI notification, and the third resource may be different from the original resource for the UL transmission. Therefore, the UL transmission is not performed in the original resource. Alternatively, the second resource may be configured through the RRC signaling, the base station and the terminal make a pre-agreement that the second resource is not configured to perform the PDSCH transmission, or whether the PDSCH transmission is performed in the second resource may be indicated by the physical layer signaling of the base station.

In other embodiments, the predefined rule further includes at least one of the following:

The DL transmission is scheduled or configured in the DL subband resources according to a pre-agreement.

The DL transmission is scheduled or configured not to overlap with the UL subband resources according to a pre-agreement.

Resources for the DL transmission are configured to exclude the UL subband resources according to a pre-agreement.

In some embodiments, the processing mode for the DL transmission may be determined through the pre-agreement. The processing mode may include, but is not limited to, the following: the DL transmission is scheduled or configured in the DL subband resources according to a pre-agreement, alternatively, the DL transmission is scheduled or configured not to overlap with the UL subband resources according to a pre-agreement, alternatively, resources for the DL transmission are configured to exclude the UL subband resources according to a pre-agreement.

In other embodiments, the transmission processing method further includes the following: a second terminal receives a notification of DCI, the UL transmission of the second terminal is scheduled to a third resource, and the third resource is different from an original resource for the UL transmission.

In some embodiments, when the terminal is the second terminal, in addition to the DL transmission processing being performed, the notification of DCI may also be received, enabling the UL transmission of the second terminal to be scheduled to the third resource for execution. The third resource may be different from the original resource for the UL transmission.

On the basis of the above embodiments, the DCI is located in a common PDCCH and is scrambled by a predefined RNTI. The predefined RNTI is used to indicate that the DCI is used to change resources for the UL transmission. Parameters of DCI include at least one of a first parameter, a second parameter, a third parameter, or a fourth parameter.

The first parameter is used for indicating a new time slot.

The second parameter is used for indicating at least one time slot, and resources for the UL transmission in the at least one time slot are changed.

The third parameter is used for indicating a symbol in the time slot determined by the second parameter, and a UL transmission in the indicated symbol is changed to a new time slot indicated by the first parameter.

The fourth parameter is used for indicating a type of the UL transmission. The indicated type of the UL transmission is permitted to transmit in a new time slot indicated by the first parameter, and the unindicated type of the UL transmission is not permitted to transmit in the new time slot indicated by the first parameter. Alternatively, the indicated type of the UL transmission is not permitted to transmit in a new time slot indicated by the first parameter, and the unindicated type of the UL transmission is permitted to transmit in the new time slot indicated by the first parameter.

In some embodiments, the DCI indicating that the DL transmission is scheduled to the third resource may be located in the common PDCCH, and the DCI is scrambled by the predefined RNTI. The DCI may include at least one of the first parameter, the second parameter, the third parameter and the fourth parameter. The first parameter is used for indicating the new time slot. The second parameter is used for indicating at least one time slot, and resources for the UL transmission in the at least one time slot are changed. The third parameter is used for indicating the symbol in the time slot determined by the second parameter, and the UL transmission in the indicated symbol is changed to the new time slot indicated by the first parameter. The fourth parameter is used for indicating the type of the UL transmission. The indicated type of the UL transmission is permitted to transmit in the new time slot, and the unindicated type of the UL transmission is not permitted to transmit in the new time slot. Alternatively, the indicated type of the UL transmission is not permitted to transmit in the new time slot, and the unindicated type of the UL transmission is permitted to transmit in the new time slot.

On the basis of the above embodiments, the DCI is located in a UE-dedicated PDCCH, and parameters of the DCI include at least one of a fifth parameter, a sixth parameter, a seventh parameter, or an eighth parameter.

The fifth parameter is used for indicating a new time slot.

The sixth parameter is used for indicating at least one time slot, and resources for the UL transmission in at least one time slot are changed to a new time slot indicated by the fifth parameter.

The seventh parameter is used for indicating a symbol in the time slot determined by the sixth parameter, and a UL transmission in the indicated symbol is changed to a new time slot indicated by the fifth parameter.

The eighth parameter is used for indicating a function type of the DCI, and the function type includes at least one of a resource for scheduling the UL transmission or a resource for changing the UL transmission.

In some embodiments, the DCI indicating that the DL transmission is scheduled to the third resource may be located in the UE-dedicated PDCCH, and the parameters of the DCI may include at least one of the fifth parameter, the sixth parameter, the seventh parameter or the eighth parameter. The fifth parameter is used for indicating the new time slot. The sixth parameter is used for indicating at least one time slot, and resources for the UL transmission in at least one time slot are changed to the new time slot indicated by the fifth parameter. The seventh parameter is used for indicating the symbol in the time slot determined by the sixth parameter, and the UL transmission in the indicated symbol is changed to the new time slot indicated by the fifth parameter. The eighth parameter is used for indicating the function type of the DCI, and the function type includes at least one of the resource for scheduling the UL transmission, or the resource for changing the UL transmission.

FIG. 6 is another flowchart of a transmission processing method according to some embodiments, which is applicable to DL transmission or UL transmission processing when UL resources and DL resources exist simultaneously. The method may be executed by a transmission processing device. The transmission processing device may be implemented by software and/or hardware methods and is generally integrated in the base station. Referring to FIG. 6, the transmission processing method includes step 210.

In step 210, the base station sends a DL transmission or receives a UL transmission according to a predefined rule in a time slot including both DL subband resources and UL subband resources. The DL subband resources and the UL subband resources are included in the time slot in a frequency division manner.

In some embodiments, the time slot includes both the DL subband resources and the UL subband resources. Moreover, the DL subband resources and the UL subband resources are located in the above-mentioned time slot in a frequency division manner, and the base station may receive the UL transmission and/or send the DL transmission according to the pre-defined rule.

On the basis of the above embodiments, the predefined rule includes the following:

When resources for the DL transmission and resources for the UL transmission overlap in the time slot, the DL transmission or the UL transmission is processed based on a terminal type corresponding to the DL transmission. The overlapping includes at least one of the following: partially or fully overlapping in time domain, partially or fully overlapping in frequency domain, or partially or fully overlapping in time domain and frequency domain. The terminal type includes: a second terminal capable of identifying the time slot and a first terminal incapable of identifying the time slot.

On the basis of the above embodiments, the predefined rule includes the following:

When the DL transmission is a PDSCH transmission, the PDSCH is scheduled by DCI in a PDCCH, and the DCI is scrambled by at least one of a C-RNTI, a MCS-C-RNTI, a CS-RNTI, a G-RNTI, a G-CS-RNTI or a MCCH-RNTI, the DL transmission is performed in resources for the DL transmission without utilizing any of the resources for the DL transmission that overlap with the UL subband resources.

On the basis of the above embodiments, the predefined rule includes the following:

When the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the DL transmission without utilizing any of the resources for the DL transmission that overlap with the UL subband resources.

On the basis of the above embodiments, the predefined rule includes the following:

When the DL transmission is a PDCCH transmission, and a PDCCH is located in the resources for a common PDCCH, the DL transmission is performed in resources for the DL transmission without utilizing any of the resources for the DL transmission that overlap with the UL subband resources.

On the basis of the above embodiments, the predefined rule includes the following:

When the DL transmission is a DL reference signal, the DL transmission is performed in resources for the DL transmission without utilizing any of the resources for the DL transmission that overlap with the UL subband resources.

On the basis of the above embodiments, the transmission processing method further includes the following:

A notification of a first resource is sent to a first terminal, and the DL transmission is prohibited in the first resource.

In some embodiments, the base station may send the notification of the first resource to the first terminal, enabling the first terminal to be prohibited from performing the DL transmission in the first resource when receiving the notification. The first terminal may be a terminal incapable of identifying the time slot where the resources for the UL transmission and the resources for the DL transmission overlap.

On the basis of the above embodiments, the transmission processing method further includes at least one of the following:

The base station indicates the first resource through DCI, and the first resource includes overlapping resources.

The resources for the DL transmission are configured to be prohibited from including the UL subband resources in the time slot.

The base station configures the first resource through a radio resource control command. A PDSCH transmission is not performed in the first resource based on a pre-agreement between the base station and a terminal, or whether a PDSCH transmission is performed in the first resource is indicated based on a physical layer signaling of the base station.

In some embodiments, the predefined rule includes the following:

When the DL transmission is a PDSCH transmission, the PDSCH is scheduled by DCI in a PDCCH, and the DCI is scrambled by at least one of a C-RNTI, a MCS-C-RNTI, a CS-RNTI, a G-RNTI, a G-CS-RNTI or a MCCH-RNTI, the DL transmission is performed in resources for the PDSCH even if the resources for the PDSCH include resources that overlap with the UL subband resources.

In other embodiments, the predefined rule includes the following:

When the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the PDCCH even if the resources for the PDCCH include resources that overlap with the UL subband resources.

In other embodiments, the predefined rule includes the following:

When the DL transmission is a PDCCH transmission, and DCI contained in the PDCCH is scrambled by at least one of a SI-RNTI, a RA-RNTI, a MSGB-RNTI, a P-RNTI or a TC-RNTI, the DL transmission is performed in resources for the PDCCH even if the resources for the PDCCH include resources that overlap with the UL subband resources.

In other embodiments, the predefined rule includes the following:

When the DL transmission is a DL reference signal, the DL transmission is performed in resources for the DL reference signal even if the resources for the DL reference signal include resources that overlap with the UL subband resources.

In other embodiments, the predefined rule includes the following:

When the DL transmission is a PDSCH transmission, the PDSCH is scheduled by DCI in a PDCCH, and the DCI is scrambled by at least one of a SI-RNTI, a RA-RNTI, a MSGB-RNTI, a P-RNTI or a TC-RNTI, the DL transmission is performed in resources for the PDSCH even if the resources for the PDSCH include resources that overlap with the UL subband resources.

In other embodiments, the predefined rule includes the following:

When the DL transmission is a PDCCH transmission, a PDCCH is located in resources for a common PDCCH, the DL transmission is performed in the resources for the PDCCH even if the resources for the PDCCH include resources that overlap with the UL subband resources.

In some embodiments, the transmission processing method further includes the following:

A notification of a second resource is sent to a second terminal, and the UL transmission is prohibited in the second resource.

In some embodiments, in addition to performing the UL transmission processing or the DL transmission processing, the base station may also send the notification of the second resource to the second terminal. The second terminal may be a terminal capable of identifying the time slot where the resources for the UL transmission and the resources for the DL transmission overlap.

On the basis of the above embodiments, the transmission processing method further includes at least one of the following:

The base station notifies the second resource through DCI, and the second resource includes overlapping resources.

The base station schedules the UL transmission in a third resource and sends corresponding DCI to the terminal, the third resource is different from an original resource for the UL transmission, and the UL transmission is cancelled in the original resource.

The base station configures the second resource and sends a corresponding RRC signaling to the terminal. The UL transmission is not performed in the second resource based on a pre-agreement between the base station and the terminal, or whether UL transmission is performed in the second resource is indicated based on a physical layer signaling of the base station.

In other embodiments, the predefined rule further includes at least one of the following:

The DL transmission is scheduled or configured in the DL subband resources according to a pre-agreement.

The DL transmission is scheduled or configured not to overlap with the UL subband resources according to a pre-agreement.

Resources for the DL transmission are configured to exclude the UL subband resources according to a pre-agreement.

In other embodiments, the transmission processing method further includes the following:

A notification of DCI is sent to a second terminal. The UL transmission of the second terminal is scheduled to a third resource, and the third resource is different from an original resource for the UL transmission.

In some embodiments, the base station may send the DCI to the second terminal to inform the second terminal that the UL transmission is scheduled to the third resource different from the original resource for the UL transmission.

On the basis of the above embodiments, the DCI is located in a common PDCCH and is scrambled by a predefined RNTI. The predefined RNTI is used to indicate that the DCI is used to change resources for the UL transmission.

Parameters of DCI include at least one of a first parameter, a second parameter, a third parameter, or a fourth parameter.

The first parameter is used for indicating a new time slot.

The second parameter is used for indicating at least one time slot, and resources for the UL transmission in the at least one time slot are changed.

The third parameter is used for indicating a symbol in the time slot determined by the second parameter, and a UL transmission in the indicated symbol is changed to a new time slot indicated by the first parameter.

The fourth parameter is used for indicating a type of the UL transmission. The indicated type of the UL transmission is permitted to transmit in a new time slot indicated by the first parameter, and the unindicated type of the UL transmission is not permitted to transmit in the new time slot indicated by the first parameter. Alternatively, the indicated type of the UL transmission is not permitted to transmit in a new time slot indicated by the first parameter, and the unindicated type of the UL transmission is permitted to transmit in the new time slot.

On the basis of the above embodiments, the DCI is located in a UE-dedicated PDCCH, and parameters of the DCI include at least one of a fifth parameter, a sixth parameter, a seventh parameter, or an eighth parameter.

The fifth parameter is used for indicating a new time slot.

The sixth parameter is used for indicating at least one time slot, and resources for the UL transmission in at least one time slot are changed to a new time slot indicated by the fifth parameter.

The seventh parameter is used for indicating a symbol in the time slot determined by the sixth parameter, and a UL transmission in the indicated symbol is changed to a new time slot indicated by the fifth parameter.

The eighth parameter is used for indicating a function type of the DCI, and the function type includes at least one of a resource for scheduling the UL transmission or a resource for changing the UL transmission.

In an exemplary implementation, taking the scheduling of the DL transmission of the UE1 in FIG. 4 as an example, the resources for the DL transmission exceed the DL subband resource range and overlap with the UL subband resources. However, since the UE1 is unaware of the configuration of the UL subband, the UE1 is unaware that the resources for the DL transmission overlap with the UL subband. Alternatively, the UL transmission of the UE2 is scheduled or configured in the UL subband, and the resources for the UL transmission of the UE2 overlap with the resources for the DL transmission of the UE1. However, the UE2 is unaware that the resources for the UL transmission overlap with the resources for the DL transmission. Then the base station and the UE1 determine the DL transmission based on at least one of the following rules:

### Rule 1

If the DL transmission is a PDSCH transmission, the PDSCH transmission is scheduled by the PDCCH, and the DCI in the PDCCH is scrambled by at least one of the C-RNTI, the MCS-C-RNTI, the CS-RNTI, the G-RNTI, the G-CS-RNTI or the MCCH-RNTI, and if the resources for the PDSCH transmission and the UL subband in the SBFD symbol overlap (overlap in the time domain and/or the frequency domain), the PDSCH transmission is performed without using the overlapping resources (in fact, the overlapping resources are in the UL subband of the SBFD symbol), resources A are notified to the UE1 by the base station, and the PDSCH transmission is prohibited from being performed in the resources A. The notification method includes at least one of the following methods.

Alternatively, if the DL transmission is a PDCCH transmission, and the DCI in the PDCCH is scrambled by at least one of the C-RNTI, the MCS-C-RNTI, the CS-RNTI, the G-RNTI, the G-CS-RNTI or the MCCH-RNTI, and if the resources for the PDCCH transmission and the UL subband in the SBFD symbol overlap (including overlap in the time domain and/or the frequency domain), the PDCCH transmission is performed without using the overlapping resources, resources A are notified to the UE1 by the base station, and the PDCCH transmission is prohibited from being performed in the resources A. The notification method includes at least one of the following methods.

Alternatively, if the DL transmission is a PDCCH transmission and is carried in the resources for the common PDCCH (for example, the resources for the PDCCH belong to a control resource set (CORESET), and the CORESET is associated with a Type 0-PDCCH CSS set), and if the resources for the PDCCH transmission and the UL subband in the SBFD symbol overlap (including overlap in the time domain and/or the frequency domain), the PDCCH transmission is performed without using the overlapping resources, resources A are notified to the UE1 by the base station, and the PDCCH transmission is prohibited from being performed in the resources A. The notification method includes at least one of the following methods.

Alternatively, if the DL transmission is a DL reference signal, and if the resources for the DL reference signal and the UL subband in the SBFD symbol overlap (including overlap in the time domain and/or the frequency domain), the transmission of the DL reference signal is performed without using the overlapping resources, resources A are notified to the UE1 by the base station, and the transmission of the DL reference signal is prohibited from being performed in the resources A. The notification method includes at least one of the following methods.

The UL transmission may be scheduled or configured in the above-mentioned overlapping resources. The UL transmission may belong to a same UE or different UEs as the above-mentioned DL transmission. For example, both the DL transmission and the UL transmission belong to the UE2. Alternatively, the DL transmission belongs to the UE1 and the UL transmission belongs to the UE2.

Based on the above processing, if the UL transmission is present in the overlapping resources, and the UL transmission and the DL transmission belong to different UEs, the base station and the UE make an agreement that the UL transmission is performed in the overlapping resources. If the overlapping resources include the UL transmission, and the UL transmission and the UL transmission belong to the same UE, the base station and the UE make an agreement that which of the UL transmission and the DL transmission is performed is processed based on other rules.

On the basis of the above embodiments, the notification method through which the resources A are notified to the UE1 by the base station includes at least one of the following:

1. The resources A are notified to the UE1 by the base station through the DCI in the PDCCH, and generally, the resources A are required to include the overlapping resources. In this manner, the DL transmission of the UE1 is not performed in the overlapping resources since the DL transmission is prohibited from being performed in the resources A.

2. The base station does not need to notify the UE1. Instead, the base station and the UE1 make an agreement that, for example, the base station always ensures that the resources for the DL transmission scheduled or configured for the UE1 are always in the DL subband of the SBFD symbol.

3. The resources A are described by the base station through a PDSCH rate matching mechanism. For example, the resources A are described by relevant parameters of a RateMatchPattern signaling in the RRC signaling, and the resources A are required to include the overlapping resources. Alternatively, the base station and the UE1 need to determine that the resources in the resources A are invalid resources for the DL transmission. In this case, if the DL transmission is the above-mentioned PDSCH transmission, the UE may determine the transport block size (TB size) corresponding to the PDSCH transmission through the actually valid resources for the PDSCH transmission, that is, the TB size corresponding to the PDSCH transmission is determined based on the valid resources in the resources corresponding to the PDSCH. The structure of the RateMatchPattern signaling is as follows. The RateMatchPattern signaling is used to describe a time-frequency resource used for PDSCH rate matching, that is, the PDSCH transmission cannot be performed in this time-frequency resource. The structure of the RateMatchPattern signaling may be as follows:

```
        RateMatchPattern ::= SEQUENCE {
        rateMatchPatternId RateMatchPatternId,
        patternType CHOICE {
        bitmaps SEQUENCE {
        resourceBlocks BIT STRING (SIZE (275)),
        symbolsInResourceBlock CHOICE {
        oneSlot BIT STRING (SIZE (14)),
        twoSlots BIT STRING (SIZE (28))
        },
        periodicityAndPattern CHOICE {
        n2 BIT STRING (SIZE (2)),
        n4 BIT STRING (SIZE (4)),
        n5 BIT STRING (SIZE (5)),
        n8 BIT STRING (SIZE (8)),
        n10 BIT STRING (SIZE (10)),
        n20 BIT STRING (SIZE (20)),
        n40 BIT STRING (SIZE (40))
        } OPTIONAL, -- Need S
        },
        controlResourceSet ControlResourceSetId
        },
        subcarrierSpacing SubcarrierSpacing OPTIONAL, -- Cond CellLevel
        dummy ENUMERATED { dynamic, semiStatic },
        ...,
        [[
        controlResourceSet-r16 ControlResourceSetId-r16 OPTIONAL -- Need R
        ]]
        }
```

After the above processing method is adopted, the base station transmits the DL transmission in the valid resources corresponding to the DL transmission, that is, the portion occupied by the resources A is removed from the resources corresponding to the DL transmission, and the remaining resources are used for the DL transmission. In other words, the DL transmission is not allowed to be transmitted in the overlapping resources. The UE receives the DL transmission and determines that the DL transmission is not transmitted in the notified resources A. If the above-mentioned DL transmission belongs to the UE2, the above-mentioned method is also applicable to the DL transmission of the UE2.

That is, the RateMatchPattern signaling is used to describe a series of resources in the SBFD slot, and these resources include DL resources in the DL subband in the SBFD symbol, and/or UL resources in the UL subband in the SBFD symbol, and/or resources in a gap between the DL subband and the UL subband. These described resources are referred to as the resources A. The time-domain resources described by the RateMatchPattern signaling involve the SBFD slot and the non-SBFD slot. For example, when the symbols in a slot are described by the above oneSlot BIT STRING or the above twoSlots BIT STRING, only the non-SBFD symbols, specifically the DL symbols, in the slot may be included, i.e., the SBFD symbols are removed, thus reducing the signaling overhead. Of course, both the non-SBFD symbols and the SBFD symbols in the slot may also be included. For example, within a slot, the resources described by the RateMatchPattern signaling may involve the DL subband and the UL subband. For example, when the RB in the slot is described by the above resourceBlocks BIT STRING, only the RB in the DL subband is included, i.e., the RB in the UL subband is not included since the RB in the UL subband is used for the UL and is not used for the DL transmission by default, thus reducing the signaling overhead. Of course, resources in the UL subband and resources in the DL subband may also be included. For example, for the UE1 (the UE incapable of identifying the SBFD slot and the SBFD subband), the above-mentioned description method in which the signaling cannot be reduced is adopted. For the UE2 (the UE capable of identifying the SBFD slot and the SBFD subband), since the UE2 is capable of identifying the SBFD subband, the above description method in which the signaling is reduced is adopted.

If the above-mentioned DL transmission belongs to the UE2, the base station and the UE2 make an agreement that the processing may be as follows: the DL transmission is prohibited from being performed in the overlapping resources, and no resource A is notified additionally to the UE2. Since the UE2 is aware of the UL subband resource location, the overlapping resource location is determined by the UE2 based on the UL subband resource location and the resources for the DL transmission.

In the resource configuration shown in FIG. 4, since resources that overlap with the UL subband are not used for the DL transmission of the UE1, the DL transmission of the UE1 does not overlap with the UL transmission of the UE2. Therefore, the UL transmission is performed by the UE2.

### Rule 2

If the DL transmission is a PDSCH transmission, the PDSCH transmission is scheduled or activated by the PDCCH, and the DCI in the PDCCH is scrambled by at least one of the C-RNTI, the MCS-C-RNTI, the CS-RNTI, the G-RNTI, the G-CS-RNTI or the MCCH-RNTI, and if the resources for the PDSCH and the UL subband resources in the SBFD symbol overlap (including overlap in the time domain and/or the frequency domain), the PDSCH transmission is performed in the resources for the PDSCH (that is, the overlapping resources are also used by the PDSCH). If the UL transmission of the UE2 is scheduled or configured to use the overlapping resources (in fact, the overlapping resources are in the UL subband of the SBFD symbol, the same below), the base station notifies the UE2 not to perform the UL transmission in the overlapping resources. The notification method includes at least one of the following methods.

Alternatively, if the DL transmission is a PDCCH transmission, and the DCI in the PDCCH is scrambled by at least one of the C-RNTI, the MCS-C-RNTI, the CS-RNTI, the G-RNTI, the G-CS-RNTI or the MCCH-RNTI, and if the resources for the PDCCH and the UL subband resources in the SBFD symbol overlap (including overlap in the time domain and/or the frequency domain), the PDCCH transmission is performed in the resources for the PDCCH (that is, the overlapping resources are also used by the PDCCH). If the UL transmission of the UE2 is scheduled or configured to use the overlapping resources, the base station notifies the UE2 not to perform the UL transmission in the overlapping resources. The notification method includes at least one of the following methods.

Alternatively, if the DL transmission is a PDCCH transmission, and the DCI in the PDCCH is scrambled by at least one of the SI-RNTI, the RA-RNTI, the MSGB-RNTI, the P-RNTI or the TC-RNTI, for example, such a PDCCH is in resources for the common PDCCH (for example, the resources for the PDCCH belong to a CORESET, and the CORESET is associated with a Type 0-PDCCH CSS set), and if the resources for the PDCCH and the UL subband in the SBFD symbol overlap (including overlap in the time domain and/or the frequency domain), the PDCCH transmission is performed in the resources for the PDCCH (that is, the overlapping resources are also used by the PDCCH). If the UL transmission of the UE2 is scheduled or configured to use the overlapping resources, the base station notifies the UE2 not to perform the UL transmission in the overlapping resources. The notification method includes at least one of the following methods.

Alternatively, if the DL transmission is a DL reference signal, and if the resources for the DL reference signal and the UL subband in the SBFD symbol overlap (including overlap in the time domain and/or the frequency domain), the transmission of the DL reference signal is performed in the resources for the DL reference signal (that is, the overlapping resources are also used by the PDCCH). If the UL transmission of the UE2 is scheduled or configured to use the overlapping resources, the base station notifies the UE2 not to perform the UL transmission in the overlapping resources. The notification method includes at least one of the following methods.

It is worth noting that the above-mentioned UL transmission is scheduled or configured in the UL subband of the SBFD symbol, and the DCI in the PDCCH corresponding to the UL transmission is scrambled by at least one of the C-RNTI, the CS-RNTI, the TC-RNTI, the MCS-C-RNTI, a configured grant small data transmission and configured scheduling RNTI (CG-SDT-CS-RNTI) or the RA-RNTI. The above-mentioned UL transmission may also include a physical random access channel (PRACH) transmission, as well as a PRACH transmission triggered by the PDCCH order.

The notification method through which the base station notifies the UE2 not to perform the UL transmission in the overlapping resources includes at least one of the following :

Option 1: the base station notifies resources B through the DCI in the PDCCH (e.g., DCI format 2-4), as described in section 11.2A of TS38.213. Generally, the resources B are required to include the overlapping resources. The base station and the UE make an agreement that the resources B are prohibited from being used for the UL transmission. Based on option 1, when the UE2 determines that the resources for the UL transmission overlap with the resources B, the UE2 does not perform the UL transmission in the resources for the UL transmission that overlap with the resources B.

Option 2: the base station notifies the UE through a DCI that the UL transmission of the UE is rescheduled to a new resource (the UL transmission in the original resource is cancelled). The resource includes a slot and/or a time-frequency resource for the UL transmission (in the slot). That is, the original slot location of the UL transmission and/or the time-frequency resource for the UL transmission is changed.

Option 3: the use of the RateMatchPattern signaling in the RRC signaling is improved. For example, the resource for notifying the UE2 not to perform UL transmission is implemented based on the RateMatchPattern signaling. Option 3 includes the following: the base station describes that resources B are in symbols including the SBFD symbol to the UE2 through the RateMatchPattern signaling. The base station and the UE make an agreement that if the resources for the UL transmission of the UE2 overlap with the resources B, the resources in the resources B are not used for the UL transmission. That is, rate matching of the UL transmission needs to be performed around the resources B, i.e., the UL transmission is not performed in the resources B. For example, the resources B (time domain resource and frequency domain resource) described by the RateMatchPattern signaling are in the UL subband, or the resources in the resources B include resources in the UL subband, then the resources described by the resources B in the UL subband cannot be used to perform the UL transmission. For example, the UE2 may assume that an important DL transmission is present in the SBFD symbol where the resources B are located. In this case, the UL transmission in the UL subband in the SBFD symbol where the resources B are located needs to be prohibited, the resources in the UL subband need to be used for the DL transmission, and the UE2 is notified in this manner. This may be combined with the design of the RateMatchPattern signaling in the above rule 1. That is, the RateMatchPattern signaling describes that the resources B are in the SBFD slot and the non-SBFD slot, or in the SBFD symbol and the non-SBFD symbol, and that the resources B are in both the UL subband and the DL subband. For the UE2 (the UE capable of identifying the SBFD slot or the SBFD subband, i.e., the UE configured with the SBFD subband), if the UL transmission of the UE2 is scheduled or configured in the SBFD slot or the SBFD subband, the UE2 needs to perform rate matching for this UL transmission, that is, if the resources for this UL transmission overlap with the resources B, the overlapping resources cannot be used for this UL transmission. In other words, the resources B described by the RateMatchPattern signaling are used for rate matching of the UL transmission of the UE, that is, among the resources for the UL transmission, resources that overlap with the resources B are not used for this UL transmission. For example, these DL transmissions include at least one of the following: a synchronization signal block (SSB), a common PDCCH (e.g., the resources for the PDCCH belong to a CORESET and the CORESET is associated with a Type 0-PDCCH CSS set), a DCI-scheduled PDSCH scrambled by at least one of the SI-RNTI, the RA-RNTI, the MSGB-RNTI, the P-RNTI or the TC-RNTI, or other higherpriority DL transmissions.

On the basis of the above embodiments, the base station and the UE make an agreement that for the UE2 (the UE aware of the SBFD subband configuration), if one or more RateMatchPattern signalings are used to describe that resources B are in one or more slots (including the SBFD slots or the SBFD symbols) to the UE2, and if the resources for the UL transmission of the UE2 (e.g., resources for a physical UL shared channel (PUSCH) transmission, resources for a physical UL control channel (PUCCH) transmission, resources for a channel sounding reference signal, SRS) transmission, resources for the PRACH transmission) overlap with the resources B, the UE2 considers the resources in the resources B to be invalid for the UL transmission, that is, the UL transmission of the UE2 cannot be performed in the resources B.

The above method lacks flexibility. For example, since the above-mentioned resources B are configured by the RateMatchPattern signaling, the location of the resources B is slowly changing, and the resources B may be inconsistent with the dynamically scheduled high-priority UL transmission. For example, a low-latency and high-reliability UL transmission (e.g., a UL transmission of ultra-reliable and low latency communications (URLLC)) suddenly occurs, the base station schedules the UL transmission promptly, and the UL transmission is scheduled in a resource that overlaps with the resources B to satisfy the timeliness requirements of the UL transmission. However, according to the above method, the UL transmission cannot be performed in the resources B, ultimately resulting in a delayed transmission of the UL transmission. The improvement based on the following methods can further increase flexibility.

The base station and the UE make an agreement that a parameter P is added to the DCI that schedules the UL transmission of the UE2, and the parameter P is used to indicate whether the UL transmission scheduled by the DCI is (or is not) required to perform rate matching based on the resources B configured according to the RateMatchPattern signaling.

For example, if the parameter P in the DCI indicates that the UL transmission is required to perform rate matching based on the resources B configured according to the RateMatchPattern signaling, the UE2 considers that the UL transmission is not transmitted in the resources B if the resources for the UL transmission are included in the resources B (or if the resources for the UL transmission overlap with the resources B). That is, based on the indication of parameter P, the UE2 considers that the resources B cannot be used for this UL transmission.

For example, if the parameter P in the DCI indicates that the UL transmission is not required to perform rate matching based on the resources B configured according to the RateMatchPattern signaling, the UE2 considers that the UL transmission may be transmitted in the resources B if the resources for the UL transmission are included in the resources B (or if the resources for the UL transmission overlap with the resources B), that is, although the resources for the UL transmission overlap with the resources B configured according to the RateMatchPattern signaling, the UE2 can still transmit the UL transmission in the resource configured for the UL transmission based on the indication of parameter P. In other words, based on the indication of parameter P, the UE2 considers that the resources B can be used for the UL transmission. The base station also correspondingly receives the UL transmission in the resources configured for the UL transmission. Through the combination of the RateMatchPattern signaling and the DCI signaling, the above method combines semi-static resources B and a dynamic indication of whether the resources B can be used, solving the problem that the resources B are used or not used for one or more UL transmissions scheduled by the DCI signaling.

For a semi-static UL transmission (configured grant physical UL shared channel (CG PUSCH)) that has a corresponding activated DCI, the activated DCI contains the parameter P used to indicate that all UL transmissions of a semi-static UL transmission activated by the DCI are required to perform rate matching based on the resources B configured according to the RateMatchPattern signaling, or are not required to perform rate matching based on the resources B configured according to the RateMatchPattern signaling.

For the semi-static UL transmission that does not have a corresponding activated DCI, a parameter is introduced into the RRC signaling of the semi-static UL transmission to describe whether all UL transmissions of the semi-static transmission are (or are not) required to perform rate matching based on the resources B configured according to the RateMatchPattern signaling.

The above method of including parameter P in the DCI is applicable to the UL transmission scheduled or configured by the DCI in the SBFD symbol (or the UL subband, the SBFD slot, or the SBFD subband). If the UL transmission overlaps with the resources B, or if the UL transmission is scheduled or configured in the UL slot (not configured with the SBFD subband), even if the UL transmission overlaps with the resources B, the parameter P in the DCI is invalid (if the DCI is present), and the UL transmission needs to be performed in the scheduled resource. Alternatively, if the UL transmission is scheduled or configured in the DL slot (not configured with the SBFD subband), even if the UL transmission overlaps with resources B, the parameter P in the DCI is invalid (if there is the DCI), and the UL transmission can not be performed in the scheduled resource.

On the basis of the above embodiments, option 2 may be used independently to change the resources for one or more UL transmissions in one or more slots to a new slot.

For example, the DCI in option 2 is used to directly indicate that the UL transmission in a slot is updated to a new resource (including a slot and/or a time-frequency resource in a slot), such as being updated to a subsequent slot, and the time-frequency resource for the UL transmission is allowed to be updated simultaneously in this slot. Alternatively, only the time-frequency resource for the UL transmission is updated, and the slot location is not updated.

Based on the DCI in option 2, the symbol where the resources for the DL transmission of the UE1 are located, i.e., the DL transmission of the UE1, is performed in the resources corresponding to the DL transmission. This means that the above-mentioned overlapping resources are allowed to transmit the DL transmission. The UE1 receives the DL transmission in the resources corresponding to the DL transmission. Based on option 2, the UE2 does not perform the UL transmission in the above-mentioned overlapping resources, since the resources for the UL transmission are updated, and the new resources do not overlap with the resources for the resources for the DL transmission of the UE1.

Option 2 is implemented in the following manner. A DCI is sent through the PDCCH, the above functions are implemented by using parameters in the DCI. The PDCCH may be the UE-specific or public.

If the PDCCH is a common PDCCH, the DCI in the PDCCH is not in a DCI format for scheduling the PUSCH, and is scrambled by a predefined RNTI. The base station and the UE make an agreement that the DCI is a DCI for updating UL transmission through the predefined RNTI. UL transmission here includes a DCI-scheduled PUSCH, a semi-static CG PUSCH, the SRS, the PRACH, etc. The parameters in the DCI include at least one of a parameter 1, a parameter 2, a parameter 3, or a parameter 4.

The parameter 1 is configured to determine one or more slots. The resources for the UL transmission in some or all SBFD symbols in the determined slot are changed.

The parameter 2 is configured to describe in which (SBFD) symbols in one or more slots determined based on the parameter 1, the resources for the UL transmission are changed. The (SBFD) symbols described by the parameter 2 are consecutive. The parameter 2 may be default. If the parameter 2 is default, it means that the resources for the UL transmission in all (SBFD) symbols in the slot determined based on the parameter 1 are changed.

The parameter 3 is configured to describe the types of UL transmission allowed to be transmitted in the new slot. If a UL transmission does not belong to any of the allowed UL transmission types, the UL transmission is cancelled in the slot determined based on the parameter 1 and is not transmitted in the new slot determined by the parameter 4. These types include at least one of the following: the DG PUSCH, the CG PUSCH, the SRS, the PRACH, or the PUCCH. The parameter 3 may be default. If the parameter 3 is default, the UL transmissions include all types of UL transmission by default.

The parameter 4 is configured to determine the new slot location. If a UL transmission satisfies the parameter 3 (and the resources for the UL transmission overlap the resources determined based on the parameter 1 and the parameter 2 (if it is present)), the UL transmission is performed in the new slot.

For example, the parameter 1 is a slot-level offset relative to the slot where the PDCCH of the DCI is located. If the parameter 1 is configured as i and the PDCCH is located in the slot n, the slot determined based on the parameter 1 is determined to be slot(n+i).

For example, the parameter 1 is the set of slot-level offsets relative to the slot where the PDCCH of the DCI is located. If the parameter 1 is configured as a set j (the set contains one or more values) and the PDCCH is located in the slot n, the slot determined based on the parameter 1 is determined to be slot(n+j). It is worth noting that in this case, slot(n+j) consists of multiple slots, and the multiple slots are determined based on multiple values in the set j, respectively.

For example, the parameter 2 describes that the locations of some SBFD symbols are in the slot determined based on the parameter 1, and the UL transmission in the determined (SBFD) symbols may be updated to the new slot. For example, the (SBFD) symbols in the slots determined based on the parameter 1 are sorted into an (SBFD) symbol set (according to the time sequence of the (SBFD) symbols), and the use of the set is merely for ease of description. The starting (SBFD) symbol and the number of subsequent consecutive (SBFD) symbols (or the ending (SBFD) symbol) are described from the set, thereby determining the locations of some SBFD symbols.

For example, the parameter 4 describes a slot-level offset relative to the slot where the PDCCH of the DCI is located. If the parameter 4 is configured as k and the PDCCH is located in the slot n, the new slot determined based on the parameter 4 is determined to be slot(n+k).

For example, the parameter 4 is a set of slot-level offsets relative to the slot where the PDCCH of the DCI is located. If the parameter 4 is configured as a set m (the set contains one or more values) and the PDCCH is located in the slot n, the slot determined based on the parameter 4 is determined to be slot(n+m). It is worth noting that in this case, slot(n+m) consists of multiple slots, and the multiple slots are determined based on multiple values in the set m, respectively. Here, based on the time sequence, each slot in the slot (n+j) corresponds one-to-one with each slot in the slot(n+m) for performing the modification of the resources for the UL transmission.

For example, the parameter 4 describes a slot-level offset relative to the slot(n+i) determined based on the parameter 1. If the parameter 4 is configured as k and the PDCCH is located in the slot n, the new slot determined based on the parameter 4 is determined to be slot(n+i+k).

For example, the parameter 4 is a set of slot-level offsets relative to the slot set determined based on the parameter 1, i.e., relative to the slot(n+j). If the parameter 4 is configured as a set m (the set contains one or more values) and the PDCCH is located in the slot n, the slot determined based on the parameter 4 is determined to be slot(n+j+m). It is worth noting that in this case, the slot(n+j+m) is determined based on a one-to-one correspondence between the values in the set j and the values in the set m according to their respective indices in the sets.

For example, the parameter 3 describes the transmission types of UL transmission allowed for modified resource locations. A set of transmission types of UL transmission is predefined by the base station and the UE, or is configured by the base station for the UE. The types of UL transmission allowed for modified resource locations are indicated in the set. Alternatively, the parameter 3 directly specifies the types of UL transmission allowed for modified resource locations.

Based on the above method, if the UL transmission is determined to be transmitted in the new slot, the previous time-frequency resources and MCS information for the UL transmission are still used.

If the PDCCH is a UE-specific PDCCH, the DCI in the PDCCH is in the DCI format for scheduling PUSCH, and is scrambled by the C-RNTI. The DCI in the PDCCH does not schedule a (new) PUSCH, or the DCI in the PDCCH schedules a PUSCH that is scheduled or configured but is not transmitted, that is, the DCI is used to modify the DCI of the PUSCH that is not transmitted. Here, to distinguish whether the DCI is a DCI scheduling a new PUSCH or a DCI scheduling a PUSCH that is scheduled or configured but is not transmitted, the parameters included in the DCI include at least one of a parameter B1, a parameter B2, a parameter B3, or a parameter B4.

The parameter B1 indicates that the DCI is a DCI that modifies the resources for the PUSCH (not transmitted) by setting a predefined value.

The parameter B2 is used to determine the slot where the PUSCH with the modified resources is located.

The parameter B3 is used to determine that the (SBFD) symbols are in the slot determined by the parameter B2. The resources for the PUSCH in the determined (SBFD) symbols are modified. That is, if the resources for the PUSCH overlap with the determined (SBFD) symbols, the resources for the PUSCH are modified. The (SBFD) symbols described by the parameter B3 are consecutive. The parameter B3 may be default. If the parameter B3 is default, it means that the resources for the PUSCH in the (SBFD) symbols of the UE in the slot determined based on the parameter B2 are changed.

The parameter B4 is used to determine the new slot. The PUSCH with the modified resources determined based on the parameter B3 is transmitted in the new slot.

For example, the parameter B1 is a newly referenced 1-bit parameter. If this parameter is configured as 1, it means that the DCI is the DCI that modifies the resources for the PUSCH (the PUSCH is scheduled), otherwise, the DCI is the DCI that schedules the PUSCH transmission.

For example, the parameter B2 is a slot-level offset relative to the slot where the PDCCH of the DCI is located. If the parameter 1 is configured as i and the PDCCH is located in the slot n, the slot determined based on the parameter B1 is determined to be slot(n+i).

For example, the parameter B2 is a slot-level offset relative to the slot where the PDCCH of the DCI is located. The value of the MCS parameter in the DCI is reinterpreted as the offset. In this manner, if the DCI is located in the slot n and the MCS value takes the value i, the slot where the PUSCH with the modified resources is located is determined to be slot(n+i).

For example, the parameter B3 describes the locations of some (SBFD) symbols in the slot determined based on the parameter B2, and the UL transmission in the determined (SBFD) symbols may be updated to the new slot. For example, the (SBFD) symbols in the slots determined based on the parameter B2 are sorted into an (SBFD) symbol set (according to the time sequence of the (SBFD) symbols), and the use of the set is merely for ease of description. The starting (SBFD) symbol and the number of subsequent consecutive (SBFD) symbols (or the ending (SBFD) symbol) are described from the set, thereby determining the locations of some (SBFD) symbols.

For example, in the related art, two parameters may be provided through the PUSCH time domain resource allocation parameter in the DCI scheduling the PUSCH. One parameter is denoted as k2, and is used to determine the slot location of the PUSCH (if the PDCCH of the DCI is located in the slot n, the PUSCH scheduled by the DCI is located in slot n+k2). The other parameter is denoted as O1, and O1 is used to determine the symbol location of the PUSCH in the slot determined based on k2. In this example, O1 is reinterpreted as the parameter B3, and k2 is reinterpreted as the parameter B4. For example, if the DCI is located in the slot n and k2 takes the value i, the new slot is determined to be slot(n+i).

For example, the base station and the UE make an agreement that the parameter B1 in the DCI scheduling the PUSCH is configured as 1. Based on the MCS parameter (taken as the parameter B2) in the DCI, the slot where the PUSCH with the modified resources is located is determined. An agreement that the resources for the PUSCH of the UE in the SBFD symbol in the slot are modified is made. A new slot is determined through k2 (taken as the parameter B4) provided based on the PUSCH time domain resource allocation parameter in the DCI. It is determined that a PUSCH symbol location is in a new slot through O1 (taken as the parameter B3) provided based on the PUSCH time domain resource allocation parameter in the DCI, and the PUSCH symbol location is used to transmit the PUSCH with the modified resources. The frequency domain resources for the PUSCH with the modified resources in the new slot are determined based on a PUSCH frequency domain resource allocation parameter in the DCI. When the PUSCH with the modified resources is transmitted in the new slot, the original MCS is still used. In this example, the PUSCH with the modified resources may be provided with new time-frequency resources for the PUSCH in the new slot.

### Rule 3

If the DL transmission is a PDSCH transmission, the PDSCH transmission is scheduled or activated by the PDCCH, and the DCI in the PDCCH is scrambled by at least one of the SI-RNTI, the RA-RNTI, the MSGB-RNTI, the P-RNTI, or the TC-RNTI, and if the resources for the PDSCH transmission and the UL subband resources in the SBFD symbol overlap (including overlap in the time domain and/or the frequency domain), the PDSCH transmission is performed in the resources for the PDSCH (that is, the overlapping resources are also used by the PDSCH). If the UL transmission of the UE2 is scheduled or configured to use the overlapping resources, the base station notifies the UE2 not to perform the UL transmission in the overlapping resources. The notification method includes at least one of the following methods. In fact, the overlapping resources are in the UL subband of the SBFD symbol, the same below.

Alternatively, if the DL transmission is a PDCCH transmission, and the DCI in the PDCCH is scrambled by at least one of the SI-RNTI, the RA-RNTI, the MSGB-RNTI, the P-RNTI or the TC-RNTI, and if the resources for the PDCCH transmission and the UL subband resources in the SBFD symbol overlap (including overlap in the time domain and/or the frequency domain), the PDCCH transmission is performed in the resources for the PDCCH. If the UL transmission of the UE2 is scheduled or configured to use the overlapping resources, the base station notifies the UE2 not to perform the UL transmission in the overlapping resources. The notification method includes at least one of the following methods.

Alternatively, if the DL transmission is a PDCCH transmission and is carried in resources for the common PDCCH (for example, the resources for the PDCCH belong to a CORESET, and the CORESET is associated with a Type 0-PDCCH CSS set), and if the resources for the PDCCH transmission and the UL subband in the SBFD symbol overlap (including overlap in the time domain and/or the frequency domain), the PDCCH transmission is performed in the resources for the PDCCH (that is, the overlapping resources are also used by the PDCCH). If the UL transmission of the UE2 is scheduled or configured to use the overlapping resources, the base station notifies the UE2 not to perform the UL transmission in the overlapping resources. The notification method includes at least one of the following methods.

Alternatively, if the DL transmission is a DL reference signal, and if the resources for the DL reference signal and the UL subband in the SBFD symbol overlap (including overlap in the time domain and/or the frequency domain), the transmission of the DL reference signal is performed in the resources for the DL reference signal (that is, the overlapping resources are also used by the PDCCH). If the UL transmission of the UE2 is scheduled or configured to use the overlapping resources, the base station notifies the UE2 not to perform the UL transmission in the overlapping resources. The notification method includes at least one of the following methods.

The notification method through which the base station notifies the UE2 not to perform the UL transmission in the overlapping resources includes at least one of the following:

Option 1-1: (reuse of option 1) the base station notifies resources B through the DCI in the PDCCH, as described in section 11.2A of TS38.213. Generally, the resources B are required to include the overlapping resources. The base station and the UE make an agreement that the resources B are prohibited from being used for the UL transmission.

Option 2-1: (reuse of option 2) the base station notifies the UE through a DCI that the UL transmission of the UE is rescheduled to a new resource (the UL transmission in the original resource is cancelled). The resource includes a slot and/or a time-frequency resource for the UL transmission (in the slot). That is, the original slot location of the UL transmission and/or the time-frequency resource for the UL transmission is changed.

Option 3-1: (reuse of option 3) the use of the RateMatchPattern signaling in the RRC signaling is improved. For example, the resource for notifying the UE2 not to perform UL transmission is implemented based on the RateMatchPattern signaling. Option 3-1 may include the following: the base station describes that resources B are in symbols including the SBFD symbol through the RateMatchPattern signaling. The base station and the UE make an agreement that if the resources for the UL transmission of the UE2 overlap with the resources B, the resources B are not used for the UL transmission. That is, rate matching of the UL transmission needs to be performed around the resources B, i.e., the UL transmission is not performed in the resources B. For example, the resources B (time domain resource and frequency domain resource) described by the RateMatchPattern signaling are in the UL subband, then the resources B in the UL subband cannot be used to perform the UL transmission. For example, an important DL transmission is present in the SBFD symbol where the resources B are located. In this case, the UL transmission in the UL subband in the SBFD symbol where the resources B are located needs to be prohibited, and the UE2 is notified in this manner. For example, these DL transmissions include at least one of the following: an SSB, a common PDCCH (e.g., the resources for the PDCCH belong to a CORESET and the CORESET is associated with a Type 0-PDCCH CSS set), a PDSCH scrambled by the SI-RNTI, the RA-RNTI, the MSGB-RNTI, the P-RNTI or the TC-RNTI, or other higherpriority DL transmissions.

Option 4-1: the base station and the UE make an agreement (no signaling is required to be sent to the UE) that the above-mentioned PDSCH is always scheduled or configured in the DL subband. Alternatively, the base station and the UE make an agreement that the above-mentioned PDSCH is always scheduled or configured without overlapping with the UL subband resources. Alternatively, the base station and the UE make an agreement that the UE does not expect the resources for the PDSCH to include the UL subband resources.

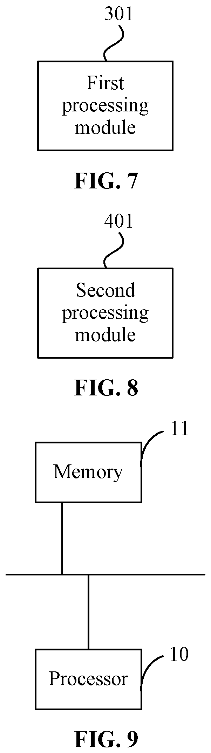

FIG. 7 is a schematic structural diagram of a transmission processing device according to some embodiments. The transmission processing device executes the transmission processing method provided in any embodiment of the present disclosure and has corresponding functional modules and effects of the execution method. The device may be implemented by software and/or hardware, and is generally applied to the user equipment. As shown in FIG. 7, the transmission processing device includes a first processing module 301.

The first processing module 301 is configured to receive a DL transmission or send a UL transmission according to a predefined rule in a time slot including both DL subband resources and UL subband resources. The DL subband resources and the UL subband resources are included in the time slot in a frequency division manner.

On the basis of the above embodiments, the predefined rule includes the following:
When resources for the DL transmission and resources for the UL transmission overlap in the time slot, the DL transmission or the UL transmission is processed based on a terminal type corresponding to the DL transmission.

The overlapping includes at least one of the following: partially or fully overlapping in time domain, partially or fully overlapping in frequency domain, or partially or fully overlapping in time domain and frequency domain.

The terminal type includes: a second terminal capable of identifying the time slot and a first terminal incapable of identifying the time slot.

On the basis of the above embodiments, the predefined rule includes the following:
When the DL transmission is a PDSCH transmission, the PDSCH is scheduled by DCI in a PDCCH, and the DCI is scrambled by at least one of a C-RNTI, a MCS-C-RNTI, a CS-RNTI, a G-RNTI, a G-CS-RNTI or a MCCH-RNTI, the DL transmission is performed in resources for the DL transmission without utilizing any of the resources for the DL transmission that overlap with the UL subband resources.

On the basis of the above embodiments, the predefined rule includes the following:
When the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the DL transmission without utilizing any of the resources for the DL transmission that overlap with the UL subband resources.

On the basis of the above embodiments, the predefined rule includes the following:
When the DL transmission is a PDCCH transmission, and a PDCCH is located in the resources for a common PDCCH, the DL transmission is performed in resources for the DL transmission without utilizing any of the resources for the DL transmission that overlap with the UL subband resources.

On the basis of the above embodiments, the predefined rule includes the following:
When the DL transmission is a DL reference signal, the DL transmission is performed in resources for the DL transmission without utilizing any of the resources for the DL transmission that overlap with the UL subband resources.

On the basis of the above embodiments, the transmission processing device further includes a first notification module.

The first notification module is configured to enable a first terminal to receive a notification of a first resource, and the DL transmission is prohibited in the first resource.

On the basis of the above embodiments, the first notification module is further configured in at least one of the following manners:

The first resource is indicated through DCI, and the first resource includes overlapping resources.

The resources for the DL transmission are configured to be prohibited from including the UL subband resources in the time slot.

The first resource is configured based on a radio resource control (RRC) signaling, a PDSCH transmission is not performed in the first resource based on a pre-agreement between a base station and the terminal, or whether the PDSCH transmission is performed in the first resource is indicated based on a physical layer signaling of the base station.

On the basis of the above embodiments, the predefined rule includes the following:
When the DL transmission is a PDSCH transmission, the PDSCH is scheduled by DCI in a PDCCH, and the DCI is scrambled by at least one of a C-RNTI, a MCS-C-RNTI, a CS-RNTI, a G-RNTI, a G-CS-RNTI or a MCCH-RNTI, the DL transmission is performed in resources for the PDSCH even if the resources for the PDSCH include resources that overlap with the UL subband resources.

On the basis of the above embodiments, the predefined rule includes the following:
When the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the PDCCH even if the resources for the PDCCH include resources that overlap with the UL subband resources.

On the basis of the above embodiments, the predefined rule includes the following:
When the DL transmission is a PDCCH transmission, and DCI contained in the PDCCH is scrambled by at least one of a SI-RNTI, a RA-RNTI, a MSGB-RNTI, a P-RNTI or a TC-RNTI, the DL transmission is performed in resources for the PDCCH even if the resources for the PDCCH include resources that overlap with the UL subband resources.

On the basis of the above embodiments, the predefined rule includes the following:
When the DL transmission is a DL reference signal, the DL transmission is performed in resources for the DL reference signal even if the resources for the DL reference signal include resources that overlap with the UL subband resources.

On the basis of the above embodiments, the predefined rule includes the following: when the DL transmission is a PDSCH transmission, the PDSCH is scheduled by DCI in a PDCCH, and the DCI is scrambled by at least one of a SI-RNTI, a RA-RNTI, a MSGB-RNTI, a P-RNTI or a TC-RNTI, the DL transmission is performed in resources for the PDSCH even if the resources for the PDSCH include resources that overlap with the UL subband resources.

On the basis of the above embodiments, the predefined rule includes the following:
When the DL transmission is a PDCCH transmission, a PDCCH is located in resources for a common PDCCH, the DL transmission is performed in the resources for the PDCCH even if the resources for the PDCCH include resources that overlap with the UL subband resources.

On the basis of the above embodiments, the transmission processing device further includes a second notification module.

The second notification module is configured to enable a second terminal to receive a notification of a second resource, and the UL transmission is prohibited in the second resource.

On the basis of the above embodiments, the second notification module is further configured in at least one of the following manners:

The second resource is indicated through DCI, and the second resource includes overlapping resources.

The UL transmission is scheduled in a third resource according to a DCI notification. The third resource is different from an original resource for the UL transmission, and the UL transmission is cancelled in the original resource.

The second resource is configured based on a RRC signaling. The PDSCH transmission is not performed in the second resource based on a pre-agreement between a base station and the terminal, or whether a PDSCH transmission is performed in the second resource is indicated based on a physical layer signaling of the base station.

On the basis of the above embodiments, the predefined rule includes the following:

The DL transmission is scheduled or configured in the DL subband resources according to a pre-agreement.

The DL transmission is scheduled or configured not to overlap with the UL subband resources according to a pre-agreement.

Resources for the DL transmission are configured to exclude the UL subband resources according to a pre-agreement.

On the basis of the above embodiments, the transmission processing device further includes a third notification module configured to enable a second terminal to receive a notification of DCI, the UL transmission of the second terminal is scheduled to a third resource, and the third resource is different from an original resource for the UL transmission.

On the basis of the above embodiments, the DCI is located in a common PDCCH and is scrambled by a predefined RNTI. The predefined RNTI is used to indicate that the DCI is used to change resources for the UL transmission.

Parameters of DCI include at least one of a first parameter, a second parameter, a third parameter, or a fourth parameter.

The first parameter is used for indicating a new time slot.

The second parameter is used for indicating at least one time slot, and resources for the UL transmission in the at least one time slot are changed.

The third parameter is used for indicating a symbol in the time slot determined by the second parameter, and a UL transmission in the indicated symbol is changed to a new time slot indicated by the first parameter.

The fourth parameter is used for indicating a type of the UL transmission. The indicated type of the UL transmission is permitted to transmit in a new time slot indicated by the first parameter, and the unindicated type of the UL transmission is not permitted to transmit in the new time slot indicated by the first parameter. Alternatively, the indicated type of the UL transmission is not permitted to transmit in a new time slot indicated by the first parameter, and the unindicated type of the UL transmission is permitted to transmit in the new time slot indicated by the first parameter.

On the basis of the above embodiments, the DCI is located in a UE-dedicated PDCCH, and parameters of the DCI include at least one of a fifth parameter, a sixth parameter, a seventh parameter, or an eighth parameter.

The fifth parameter is used for indicating a new time slot.

The sixth parameter is used for indicating at least one time slot, and resources for the UL transmission in at least one time slot are changed to a new time slot indicated by the fifth parameter.

The seventh parameter is used for indicating a symbol in the time slot determined by the sixth parameter, and a UL transmission in the indicated symbol is changed to a new time slot indicated by the fifth parameter.

The eighth parameter is used for indicating a function type of the DCI, and the function type includes at least one of a resource for scheduling the UL transmission or a resource for changing the UL transmission.

FIG. 8 is another schematic structural diagram of a transmission processing device according to some embodiments. The transmission processing device executes the transmission processing method provided in any embodiment of the present disclosure and has corresponding functional modules and effects of the execution method. The device may be implemented by software and/or hardware, and is generally applied to the base station. As shown in FIG. 8, the transmission processing device includes a second processing module 401.

The second processing module 401 is configured to send a DL transmission or receive a UL transmission according to a predefined rule in a time slot including both DL subband resources and UL subband resources.

The DL subband resources and the UL subband resources are included in the time slot in a frequency division manner.

On the basis of the above embodiments, the predefined rule includes the following:
When resources for the DL transmission and resources for the UL transmission overlap in the time slot, the DL transmission or the UL transmission is processed based on a terminal type corresponding to the DL transmission.

The overlapping includes at least one of the following: partially or fully overlapping in time domain, partially or fully overlapping in frequency domain, or partially or fully overlapping in time domain and frequency domain.

The terminal type includes: a second terminal capable of identifying the time slot and a first terminal incapable of identifying the time slot.

On the basis of the above embodiments, the predefined rule includes the following:
When the DL transmission is a PDSCH transmission, the PDSCH is scheduled by DCI in a PDCCH, and the DCI is scrambled by at least one of a C-RNTI, a MCS-C-RNTI, a CS-RNTI, a G-RNTI, a G-CS-RNTI or a MCCH-RNTI, the DL transmission is performed in resources for the DL transmission without utilizing any of the resources for the DL transmission that overlap with the UL subband resources.

On the basis of the above embodiments, the predefined rule includes the following:
When the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the DL transmission without utilizing any of the resources for the DL transmission that overlap with the UL subband resources.

On the basis of the above embodiments, the predefined rule includes the following:
When the DL transmission is a PDCCH transmission, and a PDCCH is located in the resources for a common PDCCH, the DL transmission is performed in resources for the DL transmission without utilizing any of the resources for the DL transmission that overlap with the UL subband resources.

On the basis of the above embodiments, the predefined rule includes the following:
When the DL transmission is a DL reference signal, the DL transmission is performed in resources for the DL transmission without utilizing any of the resources for the DL transmission that overlap with the UL subband resources.

On the basis of the above embodiments, the transmission processing device further includes a fourth notification module configured to send a notification of a first resource to a first terminal, and the DL transmission is prohibited in the first resource.

On the basis of the above embodiments, the fourth notification module is further configured in at least one of the following manners:
The first resource is indicated through DCI, and the first resource includes overlapping resources.

The resources for the DL transmission are configured to be prohibited from including the UL subband resources in the time slot.

The first resource is configured through a radio resource control command. A PDSCH transmission is not performed in the first resource based on a pre-agreement between the device (such as the base station) and a terminal, or whether a PDSCH transmission is performed in the first resource is indicated based on a physical layer signaling of the device (such as the base station).

On the basis of the above embodiments, the predefined rule includes the following:
When the DL transmission is a PDCCH transmission, and DCI contained in the PDCCH is scrambled by at least one of a C-RNTI, a MCS-C-RNTI, a CS-RNTI, a G-RNTI, a G-CS-RNTI or a MCCH-RNTI, the DL transmission is performed in resources for the PDCCH even if the resources for the PDCCH include resources that overlap with the UL subband resources.

On the basis of the above embodiments, the predefined rule includes the following:
When the DL transmission is a PDCCH transmission, and DCI contained in the PDCCH is scrambled by at least one of a SI-RNTI, a RA-RNTI, a MSGB-RNTI, a P-RNTI or a TC-RNTI, the DL transmission is performed in resources for the PDCCH even if the resources for the PDCCH include resources that overlap with the UL subband resources.

On the basis of the above embodiments, the predefined rule includes the following:
When the DL transmission is a DL reference signal, the DL transmission is performed in resources for the DL reference signal even if the resources for the DL reference signal include resources that overlap with the UL subband resources.

On the basis of the above embodiments, the predefined rule includes the following:
When the DL transmission is a PDSCH transmission, the PDSCH is scheduled by DCI in a PDCCH, and the DCI is scrambled by at least one of a SI-RNTI, a RA-RNTI, a MSGB-RNTI, a P-RNTI or a TC-RNTI, the DL transmission is performed in resources for the PDSCH even if the resources for the PDSCH include resources that overlap with the UL subband resources.

On the basis of the above embodiments, the predefined rule includes the following:
When the DL transmission is a PDCCH transmission, a PDCCH is located in resources for a common PDCCH, the DL transmission is performed in the resources for the PDCCH even if the resources for the PDCCH include resources that overlap with the UL subband resources.

On the basis of the above embodiments, the transmission processing device further includes a fifth notification module configured to send a notification of a second resource to a second terminal, and the UL transmission is prohibited in the second resource.

On the basis of the above embodiments, the fifth notification module is further configured in at least one of the following manners:
The second resource is notified through DCI, and the second resource includes overlapping resources.

The UL transmission is scheduled in a third resource, and corresponding DCI is sent to the terminal. The third resource is different from an original resource for the UL transmission, and the UL transmission is cancelled in the original resource.

The second resource is configured, and a corresponding RRC signaling is sent to the terminal. The UL transmission is not performed in the second resource based on a pre-agreement between the device (such as the base station) and the terminal, or whether UL transmission is performed in the second resource is indicated based on a physical layer signaling of the device (such as the base station).

On the basis of the above embodiments, the predefined rule includes at least one of the following:
The DL transmission is scheduled or configured in the DL subband resources according to a pre-agreement.

The DL transmission is scheduled or configured not to overlap with the UL subband resources according to a pre-agreement.

Resources for the DL transmission are configured to exclude the UL subband resources according to a pre-agreement.

On the basis of the above embodiments, the transmission processing device further includes a sixth notification module configured to send a notification of DCI to a second terminal. The UL transmission of the second terminal is scheduled to a third resource, and the third resource is different from an original resource for the UL transmission.

On the basis of the above embodiments, in the transmission processing device, the DCI is located in a common PDCCH and is scrambled by a predefined RNTI. The predefined RNTI is used to indicate that the DCI is used to change resources for the UL transmission.

Parameters of DCI include at least one of a first parameter, a second parameter, a third parameter, or a fourth parameter.

The first parameter is used for indicating a new time slot.

The second parameter is used for indicating at least one time slot, and resources for the UL transmission in the at least one time slot are changed.

The third parameter is used for indicating a symbol in the time slot determined by the second parameter, and a UL transmission in the indicated symbol is changed to a new time slot indicated by the first parameter.

The fourth parameter is used for indicating a type of the UL transmission. The indicated type of the UL transmission is permitted to transmit in a new time slot indicated by the first parameter, and the unindicated type of the UL transmission is not permitted to transmit in the new time slot indicated by the first parameter. Alternatively, the indicated type of the UL transmission is not permitted to transmit in a new time slot indicated by the first parameter, and the unindicated type of the UL transmission is permitted to transmit in the new time slot indicated by the first parameter.

On the basis of the above embodiments, in the transmission processing device, the DCI is located in a UE-dedicated PDCCH, and parameters of the DCI include at least one of a fifth parameter, a sixth parameter, a seventh parameter, or an eighth parameter.

The fifth parameter is used for indicating a new time slot.

The sixth parameter is used for indicating at least one time slot, and resources for the UL transmission in at least one time slot are changed to a new time slot indicated by the fifth parameter.

The seventh parameter is used for indicating a symbol in the time slot determined by the sixth parameter, and a UL transmission in the indicated symbol is changed to a new time slot indicated by the fifth parameter.

The eighth parameter is used for indicating a function type of the DCI, and the function type includes at least one of a resource for scheduling the UL transmission or a resource for changing the UL transmission.

FIG. 9 is a schematic structural diagram of an electronic device according to some embodiments. The electronic device includes a processor 10 and a memory 11. The electronic device may include one or more processors 10, and in FIG. 9, one processor 10 is taken as an example. The processor 10 and the memory 11 in the electronic device may be connected via a bus or other means. In FIG. 9, a connection via a bus is taken as an example.

The memory 11, as a computer-readable storage medium, may be used to store software programs, computer-executable programs and modules, for example, the corresponding modules (the first processing module 301 or the second processing module 401) of the device in the embodiments of the present disclosure. The processor 10 executes various functional applications and data processing of the electronic device, i.e., implements the above transmission processing method, by running software programs, instructions and modules stored in the memory 11.

The memory 11 may primarily include a program storage area and a data storage area. The program storage area may store an operating system and an application program required by at least one function. The data storage area may store data created according to the use of the electronic device. Furthermore, the memory 11 may include high-speed random access memory, and may also include non-volatile memory, such as at least one disk storage device, flash memory, or other non-volatile solid-state storage device. In some embodiments, the memory 11 may include memory located remotely from the processor 10, and the remote memory may be connected to the electronic device via a network. Examples of such networks include, but are not limited to, the Internet, an intranet, a local area network, a mobile communication network, and combinations thereof.

The embodiments of the present disclosure also provide a storage medium containing computer-executable instructions. The computer-executable instructions, when executed by the computer processor, are configured to execute a transmission processing method, and the method includes the following:

The terminal receives a DL transmission or sends a UL transmission according to a predefined rule in a time slot including both DL subband resources and UL subband resources.

The DL subband resources and the UL subband resources are included in the time slot in a frequency division manner.

Alternatively, the computer-executable instructions, when executed by the computer processor, are configured to execute a transmission processing method, and the method includes the following:

The base station sends a DL transmission or receives a UL transmission according to a predefined rule in a time slot including both DL subband resources and UL subband resources.

The DL subband resources and the UL subband resources are included in the time slot in a frequency division manner.

From the above description of the implementations, those skilled in the art can clearly understand that the present disclosure may be implemented using software and necessary generalpurpose hardware, and of course, may also be implemented using hardware, but in many cases, the former is a better implementation. Based on this understanding, the technical solution of the present disclosure may be embodied in the form of a software product. The computer software product may be stored in a computer-readable storage medium, such as a computer floppy disk, a read-only memory (ROM), a random access memory (RAM), a FLASH memory, a hard disk or an optical disk, including multiple instructions to enable a computer device (which may be a personal computer, a server, a network device, etc.) to execute the transmission processing method described in various embodiments of the present disclosure.

It is worth noting that in the embodiments of the above device, various units and modules included are merely divided according to the functional logic, but are not limited to the above division, as long as the corresponding functions are implemented. In addition, the specific names of various functional units are merely for ease of distinguishing between the functional units, but are not intended to limit the protection scope of the present disclosure.

Functional modules or units in all or some steps, apparatus, device in the method provided above may be implemented as software, firmware, hardware or suitable combinations thereof.

In a hardware implementation, the division between the functional modules or units mentioned in the above description does not necessarily correspond to the division of physical components. For example, a physical component may have multiple functions, or a function or step may be executed cooperatively by several physical components. Some or all physical components may be implemented as software executed by a processor, such as a central processing unit, a digital signal processor or a microprocessor, or implemented as hardware, or implemented as an integrated circuit, such as an application-specific integrated circuit. Corresponding software may be distributed on a computer-readable medium, which may include a computer storage medium (or non-transitory medium) and a communication medium (or transitory medium). As is well known to those skilled in the art, the term computer storage medium includes volatile and nonvolatile, removable and non-removable media implemented in any method or technology for storing information, such as computer-readable instructions, data structures, program modules or other data. A computer storage medium includes, but is not limited to, RAM, ROM, EEPROM, flash memory or other memory technologies, CD-ROM, digital versatile disc (DVD) or other optical disc storage, magnetic cartridge, magnetic tape, magnetic disk storage or other magnetic storage devices, or may be any other medium used for storing desired information and accessible by a computer. Furthermore, it is well known to those skilled in the art that a communication medium typically contains computer-readable instructions, data structures, program modules or other data in a modulated data signal such as a carrier wave or other transmission mechanism, and may include any information delivery medium.

## Claims

1. A transmission processing method, comprising:
receiving, by a terminal, a downlink transmission or sending, by the terminal, an uplink transmission according to a predefined rule in a time slot comprising both downlink subband resources and uplink subband resources;
wherein the downlink subband resources and the uplink subband resources are comprised in the time slot in a frequency division manner.

2. The method according to claim 1, wherein the predefined rule comprises:
in response to resources for the downlink transmission and resources for the uplink transmission overlapping in the time slot, processing the downlink transmission or the uplink transmission based on a terminal type corresponding to the downlink transmission;
wherein the overlapping comprises at least one of the following: partially or fully overlapping in time domain, partially or fully overlapping in frequency domain, or partially or fully overlapping in time domain and frequency domain;
wherein the terminal type comprises: a second terminal capable of identifying the time slot and a first terminal incapable of identifying the time slot.

3. The method according to claim 1, wherein the predefined rule comprises:
in response to the downlink transmission being a physical downlink shared channel transmission, the physical downlink shared channel being scheduled by downlink control information in a physical downlink control channel, and the downlink control information being scrambled by at least one of a cell radio-network temporary identifier, C-RNTI, a modulation and coding scheme C-RNTI, MCS-C-RNTI, a configured scheduling RNTI, CS-RNTI, a group RNTI, G-RNTI, a group configured scheduling RNTI, G-CS-RNTI, or a multicast control channel RNTI, MCCH-RNTI, performing the downlink transmission in resources for the downlink transmission without utilizing any of the resources for the downlink transmission that overlap with the uplink subband resources.

4. The method according to claim 1, wherein the predefined rule comprises:
in response to the downlink transmission being a physical downlink control channel transmission, and downlink control information contained in the physical downlink control channel being scrambled by at least one of a C-RNTI, a MCS-C-RNTI, a CS-RNTI, a G-RNTI, a G-CS-RNTI or a MCCH-RNTI, performing the downlink transmission in resources for the downlink transmission without utilizing any of the resources for the downlink transmission that overlap with the uplink subband resources.

5. The method according to claim 1, wherein the predefined rule comprises:
in response to the downlink transmission being a physical downlink control channel transmission, and the physical downlink control channel being located in resources for a common physical downlink control channel, performing the downlink transmission in resources for the downlink transmission without utilizing any of the resources for the downlink transmission that overlap with the uplink subband resources.

6. The method according to claim 1, wherein the predefined rule comprises:
in response to the downlink transmission being a downlink reference signal, performing the downlink transmission in resources for the downlink transmission without utilizing any of the resources for the downlink transmission that overlap with the uplink subband resources.

7. The method according to any one of claims 3 to 6, further comprising:
receiving, by a first terminal, a notification of a first resource, wherein the downlink transmission is prohibited in the first resource.

8. The method according to claim 7, further comprising at least one of the following:
the first resource being indicated through downlink control information, wherein the first resource comprises overlapping resources;
the resources for the downlink transmission being configured to be prohibited from including the uplink subband resources in the time slot; or
the first resource being configured based on a radio resource control signaling, wherein a physical downlink shared channel transmission is not performed in the first resource based on a pre-agreement between a base station and the terminal, or whether the physical downlink shared channel transmission is performed in the first resource is indicated based on a physical layer signaling of the base station.

9. The method according to claim 1, wherein the predefined rule comprises:
in response to the downlink transmission being a physical downlink shared channel transmission, the physical downlink shared channel being scheduled by downlink control information in a physical downlink control channel, and the downlink control information being scrambled by at least one of a C-RNTI, a MCS-C-RNTI, a CS-RNTI, a G-RNTI, a G-CS-RNTI or a MCCH-RNTI, performing the downlink transmission in resources for the physical downlink shared channel even if the resources for the physical downlink shared channel comprise resources that overlap with the uplink subband resources.

10. The method according to claim 1, wherein the predefined rule comprises:
in response to the downlink transmission being a physical downlink control channel transmission, and downlink control information contained in the physical downlink control channel being scrambled by at least one of a C-RNTI, a MCS-C-RNTI, a CS-RNTI, a G-RNTI, a G-CS-RNTI or a MCCH-RNTI, performing the downlink transmission in resources for the physical downlink control channel even if the resources for the physical downlink control channel comprise resources that overlap with the uplink subband resources.

11. The method according to claim 1, wherein the predefined rule comprises:
in response to the downlink transmission being a physical downlink control channel transmission, and downlink control information contained in the physical downlink control channel being scrambled by at least one of a system information RNTI, SI-RNTI, a random access RNTI, RA-RNTI, a message B RNTI, MSGB-RNTI, a paging RNTI, P-RNTI, or a temporary cell RNTI, TC-RNTI, performing the downlink transmission in resources for the physical downlink control channel even if the resources for the physical downlink control channel comprise resources that overlap with the uplink subband resources.

12. The method according to claim 1, wherein the predefined rule comprises:
in response to the downlink transmission being a downlink reference signal, performing the downlink transmission in resources for the downlink reference signal even if the resources for the downlink reference signal comprise resources that overlap with the uplink subband resources.

13. The method according to claim 1, wherein the predefined rule comprises:
in response to the downlink transmission being a physical downlink shared channel transmission, the physical downlink shared channel being scheduled by downlink control information in a physical downlink control channel, and the downlink control information being scrambled by at least one of a SI-RNTI, a RA-RNTI, a MSGB-RNTI, a P-RNTI or a TC-RNTI, performing the downlink transmission in resources for the physical downlink shared channel even if the resources for the physical downlink shared channel comprise resources that overlap with the uplink subband resources.

14. The method according to claim 1, wherein the predefined rule comprises:
in response to the downlink transmission being a physical downlink control channel transmission, and the physical downlink control channel being located in resources for a common physical downlink control channel, performing the downlink transmission in resources for the physical downlink control channel even if the resources for the physical downlink control channel comprise resources that overlap with the uplink subband resources.

15. The method according to any one of claims 9 to 14, further comprising:
receiving, by a second terminal, a notification of a second resource, wherein the uplink transmission is prohibited in the second resource.

16. The method according to claim 15, further comprising at least one of the following:
the second resource being indicated through downlink control information, wherein the second resource comprises overlapping resources;
the uplink transmission being scheduled in a third resource according to a downlink control information notification, wherein the third resource is different from an original resource for the uplink transmission, and the uplink transmission is cancelled in the original resource; or
the second resource being configured based on a radio resource control signaling, wherein a physical downlink shared channel transmission is not performed in the second resource based on a pre-agreement between a base station and the terminal, or whether a physical downlink shared channel transmission is performed in the second resource is indicated based on a physical layer signaling of the base station.

17. The method according to claim 1, wherein the predefined rule comprises at least one of the following:
the downlink transmission being scheduled or configured in the downlink subband resources according to a pre-agreement;
the downlink transmission being scheduled or configured not to overlap with the uplink subband resources according to a pre-agreement; or
resources for the downlink transmission being configured to exclude the uplink subband resources according to a pre-agreement.

18. The method according to claim 1, further comprising:
receiving, by a second terminal, a notification of downlink control information, wherein the uplink transmission of the second terminal is scheduled to a third resource, and the third resource is different from an original resource for the uplink transmission.

19. The method according to claim 18, wherein the downlink control information is located in a common physical downlink control channel and is scrambled by a predefined RNTI, wherein the predefined RNTI is used to indicate that the downlink control information is used to change resources for the uplink transmission; and parameters of the downlink control information comprise at least one of the following:
a first parameter for indicating a new time slot;
a second parameter for indicating at least one time slot, wherein resources for the uplink transmission in the at least one time slot are changed;
a third parameter for indicating a symbol in the time slot determined by a second parameter, wherein an uplink transmission in the indicated symbol is changed to a new time slot indicated by a first parameter; or
a fourth parameter for indicating a type of the uplink transmission, wherein the indicated type of the uplink transmission is permitted to transmit in a new time slot indicated by a first parameter, and the unindicated type of the uplink transmission is not permitted to transmit in the new time slot indicated by the first parameter; or, the indicated type of the uplink transmission is not permitted to transmit in a new time slot indicated by a first parameter, and the unindicated type of the uplink transmission is permitted to transmit in the new time slot indicated by the first parameter.

20. The method according to claim 18, wherein the downlink control information is located in a UE-dedicated physical downlink control channel, and parameters of the downlink control information comprise at least one of the following:
a fifth parameter for indicating a new time slot;
a sixth parameter for indicating at least one time slot, wherein resources for the uplink transmission in the at least one time slot are changed to a new time slot indicated by a fifth parameter;
a seventh parameter for indicating a symbol in the time slot determined by a sixth parameter, wherein an uplink transmission in the indicated symbol is changed to a new time slot indicated by a fifth parameter; or
an eighth parameter for indicating a function type of the downlink control information, wherein the function type comprises at least one of a resource for scheduling the uplink transmission or a resource for changing the uplink transmission.

21. A transmission processing method, comprising:
sending, by a base station, a downlink transmission or receiving, by a base station, an uplink transmission according to a predefined rule in a time slot comprising both downlink subband resources and uplink subband resources;
wherein the downlink subband resources and the uplink subband resources are comprised in the time slot in a frequency division manner.

22. The method according to claim 21, wherein the predefined rule comprises:
in response to resources for the downlink transmission and resources for the uplink transmission overlapping in the time slot, processing the downlink transmission or the uplink transmission based on a terminal type corresponding to the downlink transmission;
wherein the overlapping comprises at least one of the following: partially or fully overlapping in time domain, partially or fully overlapping in frequency domain, or partially or fully overlapping in time domain and frequency domain;
wherein the terminal type comprises: a second terminal capable of identifying the time slot and a first terminal incapable of identifying the time slot.

23. The method according to claim 21, wherein the predefined rule comprises:
in response to the downlink transmission being a physical downlink shared channel transmission, the physical downlink shared channel being scheduled by downlink control information in a physical downlink control channel, and the downlink control information being scrambled by at least one of a C-RNTI, a MCS-C-RNTI, a CS-RNTI, a G-RNTI, a G-CS-RNTI or a MCCH-RNTI, performing the downlink transmission in resources for the downlink transmission without utilizing any of the resources for the downlink transmission that overlap with the uplink subband resources.

24. The method according to claim 21, wherein the predefined rule comprises:
in response to the downlink transmission being a physical downlink control channel transmission, and downlink control information contained in the physical downlink control channel being scrambled by at least one of a C-RNTI, a MCS-C-RNTI, a CS-RNTI, a G-RNTI, a G-CS-RNTI or a MCCH-RNTI, performing the downlink transmission in resources for the downlink transmission without utilizing any of the resources for the downlink transmission that overlap with the uplink subband resources.

25. The method according to claim 21, wherein the predefined rule comprises:
in response to the downlink transmission being a physical downlink control channel transmission, and the physical downlink control channel being located in resources for common physical downlink control channel, performing the downlink transmission in resources for the downlink transmission without utilizing any of the resources for the downlink transmission that overlap with the uplink subband resources.

26. The method according to claim 21, wherein the predefined rule comprises:
in response to the downlink transmission being a downlink reference signal, performing the downlink transmission in resources for the downlink transmission without utilizing any of the resources for the downlink transmission that overlap with the uplink subband resources.

27. The method according to any one of claims 23 to 26, further comprising:
sending a notification of a first resource to a first terminal, wherein the downlink transmission is prohibited in the first resource.

28. The method according to claim 27, further comprising at least one of the following:
indicating, by the base station, the first resource through downlink control information, wherein the first resource comprises overlapping resources;
configuring the resources for the downlink transmission to be prohibited from including the uplink subband resources in the time slot; or
configuring, by the base station, the first resource through a radio resource control command, wherein a physical downlink shared channel transmission is not performed in the first resource based on a pre-agreement between the base station and a terminal, or whether a physical downlink shared channel transmission is performed in the first resource is indicated based on a physical layer signaling of the base station.

29. The method according to claim 21, wherein the predefined rule comprises:
in response to the downlink transmission being a physical downlink shared channel transmission, the physical downlink shared channel being scheduled by downlink control information in a physical downlink control channel, and the downlink control information being scrambled by at least one of a C-RNTI, a MCS-C-RNTI, a CS-RNTI, a G-RNTI, a G-CS-RNTI or a MCCH-RNTI, performing the downlink transmission in resources for the physical downlink shared channel even if the resources for the physical downlink shared channel comprise resources that overlap with the uplink subband resources.

30. The method according to claim 21, wherein the predefined rule comprises:
in response to the downlink transmission being a physical downlink control channel transmission, and downlink control information contained in the physical downlink control channel being scrambled by at least one of a C-RNTI, a MCS-C-RNTI, a CS-RNTI, a G-RNTI, a G-CS-RNTI or a MCCH-RNTI, performing the downlink transmission in resources for the physical downlink control channel even if the resources for the physical downlink control channel comprise resources that overlap with the uplink subband resources.

31. The method according to claim 21, wherein the predefined rule comprises:
in response to the downlink transmission being a physical downlink control channel transmission, and downlink control information contained in the physical downlink control channel being scrambled by at least one of a SI-RNTI, a RA-RNTI, a MSGB-RNTI, a P-RNTI or a TC-RNTI, performing the downlink transmission in resources for the physical downlink control channel even if the resources for the physical downlink control channel comprise resources that overlap with the uplink subband resources.

32. The method according to claim 21, wherein the predefined rule comprises:
in response to the downlink transmission being a downlink reference signal, performing the downlink transmission in resources for the downlink reference signal even if the resources for the downlink reference signal comprise resources that overlap with the uplink subband resources.

33. The method according to claim 21, wherein the predefined rule comprises:
in response to the downlink transmission being a physical downlink shared channel transmission, the physical downlink shared channel being scheduled by downlink control information in a physical downlink control channel, and the downlink control information being scrambled by at least one of a SI-RNTI, a RA-RNTI, a MSGB-RNTI, a P-RNTI or a TC-RNTI, performing the downlink transmission in resources for the physical downlink shared channel even if the resources for the physical downlink shared channel comprise resources that overlap with the uplink subband resources.

34. The method according to claim 21, wherein the predefined rule comprises:
in response to the downlink transmission being a physical downlink control channel transmission, and the physical downlink control channel being located in resources for a common physical downlink control channel, performing the downlink transmission in resources for the physical downlink control channel even if the resources for the physical downlink control channel comprise resources that overlap with the uplink subband resources.

35. The method according to any one of claims 29 to 34, further comprising:
sending a notification of a second resource to a second terminal, wherein the uplink transmission is prohibited in the second resource.

36. The method according to claim 35, further comprising at least one of the following:
notifying, by the base station, the second resource through downlink control information, wherein the second resource comprises overlapping resources;
scheduling, by the base station, the uplink transmission in a third resource and sending corresponding downlink control information to the second terminal, wherein the third resource is different from an original resource for the uplink transmission, and the uplink transmission is cancelled in the original resource; or
configuring, by the base station the second resource and sending a corresponding radio resource control signaling to the second terminal, wherein the uplink transmission is not performed in the second resource based on a pre-agreement between the base station and the terminal, or whether uplink transmission is performed in the second resource is indicated based on a physical layer signaling of the base station.

37. The method according to claim 21, wherein the predefined rule further comprises at least one of the following:
scheduling the downlink transmission or configuring the downlink transmission in the downlink subband resources according to a pre-agreement;
scheduling the downlink transmission or configuring the downlink transmission not to overlap with the uplink subband resources according to a pre-agreement; or
configuring resources for the downlink transmission to exclude the uplink subband resources according to a pre-agreement.

38. The method according to claim 21, further comprising:
sending a notification of downlink control information to a second terminal, wherein the uplink transmission of the second terminal is scheduled to a third resource, and the third resource is different from an original resource for the uplink transmission.

39. The method according to claim 38, wherein the downlink control information is located in a common physical downlink control channel and is scrambled by a predefined RNTI, wherein the predefined RNTI is used to indicate that the downlink control information is used to change resources for the uplink transmission; and parameters of the downlink control information comprise at least one of the following:
a first parameter for indicating a new time slot;
a second parameter for indicating at least one time slot, wherein resources for the uplink transmission in the at least one time slot are changed;
a third parameter for indicating a symbol in the time slot determined by a second parameter, wherein uplink transmission in the indicated symbol is changed to a new time slot indicated by a first parameter; or
a fourth parameter for indicating a type of the uplink transmission, wherein the indicated type of the uplink transmission is permitted to transmit in a new time slot indicated by a first parameter, and the unindicated type of the uplink transmission is not permitted to transmit in the new time slot indicated by the first parameter; or, the indicated type of the uplink transmission is not permitted to transmit in a new time slot indicated by a first parameter, and the unindicated type of the uplink transmission is permitted to transmit in the new time slot indicated by the first parameter.

40. The method according to claim 38, wherein the downlink control information is located in a UE-dedicated physical downlink control channel, and parameters of the downlink control information comprise at least one of the following:
a fifth parameter for indicating a new time slot;
a sixth parameter for indicating at least one time slot, wherein resources for the uplink transmission in the at least one time slot are changed to a new time slot indicated by a fifth parameter;
a seventh parameter for indicating a symbol in the time slot determined by a sixth parameter, wherein uplink transmission in the indicated symbol is changed to a new time slot indicated by a fifth parameter; or
an eighth parameter for indicating a function type of the downlink control information, wherein the function type comprises at least one of a resource for scheduling the uplink transmission or a resource for changing the uplink transmission.

41. An electronic device, comprising:
one or more processors;
a memory for storing one or more programs;
wherein the one or more programs, when executed by the one or more processors, cause the one or more processors to implement the transmission processing method according to any one of claims 1 to 20 or claims 21 to 40.

42. A computer-readable storage medium, storing one or more programs, wherein the one or more programs, when executed by one or more processors, are configured to implement the transmission processing method according to any one of claims 1 to 20 or claims 21 to 40.
